# EUROPEAN PATENT APPLICATION

(11) **EP 4 094 831 A1**
(43) Date of publication of application: **30.11.2022**
(21) Application number: 20915988.8
(22) Date of filing: 21.12.2020
(51) Int. Cl.: B01J 31/06, B01J 31/02, C01B 32/40, C25B 1/01

(54) **CATALYST, METHOD FOR PRODUCING CATALYST, CARBON DIOXIDE REDUCTION ELECTRODE, MULTILAYER BODY, AND CARBON DIOXIDE REDUCTION DEVICE**

(30) Priority: 22.01.2020 US 202062964236 P; 21.05.2020 US 202063028038 P
(71) Applicant: SEKISUI CHEMICAL CO., LTD., Osaka-shi Osaka 530-8565 (JP)
(72) Inventor: FUJINUMA, Naohiro, Tsukuba-shi, Ibaraki 300-4292 (JP)
(74) Representative: Ter Meer Steinmeister & Partner
(86) International application number: PCT/JP2020/047696
(87) International publication number: WO 2021/149433

(57) **Abstract**

The present invention provides a catalyst, a carbon dioxide reduction electrode and a laminated assembly. The catalyst is obtained by sintering a mixture including a metal derivative, a pyridine derivative and a carbon compound. The carbon dioxide reduction electrode includes the catalyst and an electrode base material to which the catalyst is attached. The laminated assembly includes, for example, a first electrode, an ion exchange membrane and a second electrode in the order presented, and the first electrode is the carbon dioxide reduction electrode.

## Description

### Technical Field

The present invention relates to a catalyst, a method for producing a catalyst, a carbon dioxide reduction electrode, a laminated assembly, and a carbon dioxide reduction apparatus.

### Background Art

Carbon dioxide reduction apparatuses which electrically reduce carbon dioxide to thereby generate valuables attract attention as measures for cutting CO₂ emissions or storing natural energy, and are researched and developed. There is a need for development of any catalyst suitable for carbon dioxide reduction, and there are reported, for example, metals, alloys, metal carbon compounds, and carbon compounds.

For example, Non-Patent Document 1 described below discloses a catalyst obtained by sintering a catalyst precursor including Co(NO₃)₂·6H₂O, 2-methylimidazole, and Zn(NO₃)₂·6H₂O at 800 to 1000°C. In addition, for example, Non-Patent Document 2 discloses a catalyst obtained by sintering a catalyst precursor including a metal nitrate salt such as Ni(NO₃)₂·6H₂O, graphene oxide, and ammonia at 750°C.

Furthermore, Non-Patent Documents 3 to 6 described below also disclose the use of Co₃O₄ or amorphous cobalt oxide in a carbon dioxide reduction catalyst.

### Prior Art Document

### Non-Patent Document

Non-Patent Document 1: Angew. Chem. Int. Ed. 2018, Yadong Li Angew. Chem. Int. Ed. 2018, 57, 1944-1948
Non-Patent Document 2: Energy Environ. Sci., 2018, Haotian Wang Energy Environ. Sci., 2018, 11, 893-903
Non-Patent Document 3: New J. Chem. 2015, 39(9), 7348-7354
Non-Patent Document 4: Angew. Chem. Int. Ed. 2016, 55(2), 698-702.
Non-Patent Document 5: Applied Catalysis B: Environmental. 2018, 229, 163-170
Non-Patent Document 6: J. Mater. Chem. A. 2019, 7(42), 24337-24346

### Summary of Invention

### Technical Problem

However, conventional catalysts for carbon dioxide reduction, as described in Non-Patent Documents 1 and 2 described above, have a need for an increase in sintering temperature and have the problem of being difficult to industrially put to practical use. Although carbon dioxide reduction desirably provides the reduction to specific compounds such as carbon monoxide and exhibits a high conversion efficiency, conventional catalysts have been sometimes insufficient in conversion efficiency to specific compounds such as carbon monoxide and incapable of having a high faraday efficiency in generation of specific compounds such as carbon monoxide. For example, Non-Patent Documents 3 to 6 disclose a catalyst for converting carbon dioxide mainly to formic acid or provide insufficient conversion efficiency and reaction selectivity in conversion to carbon monoxide.

An object of the present invention is to provide, for example, a catalyst and a carbon dioxide reduction electrode which can be produced without elevating sintering temperature and which can increase conversion efficiency to a specific compound such as carbon monoxide in carbon dioxide reduction, and also provide a laminated assembly and a carbon dioxide reduction apparatus which can increase the conversion efficiency.

Another object of the present invention is to provide a catalyst, a carbon dioxide reduction electrode, a laminated assembly and a carbon dioxide reduction apparatus which can increase conversion efficiency to a specific compound such as carbon monoxide and in faraday efficiency in generation of a specific compound such as carbon monoxide.

### Solution to Problem

The present invention provides, for example, the following [1] to [25].
[1] A catalyst obtained by sintering a mixture including a metal derivative, a nitrogen-containing derivative and a carbon compound.
[2] The catalyst according to [1], wherein the mixture includes a pyridine derivative as the nitrogen-containing derivative.
[3] The catalyst according to [1] or [2], wherein a molar ratio (nitrogen-containing aromatic ring/metal element) of a nitrogen-containing aromatic ring of the nitrogen-containing derivative to a metal element of the metal derivative in the mixture is 2 or more and 20 or less.
[4] The catalyst according to any one of [1] to [3], wherein a content of a metal derived from the metal derivative in the mixture is 1.0 mass% or more and 5 mass% or less.
[5] The catalyst according to any one of [1] to [4], wherein a metal element in the metal derivative is a metal element of Groups 7 to 12.
[6] The catalyst according to [5], wherein the metal element is at least one selected from the group consisting of Co, Fe and Ni.
[7] The catalyst according to any one of [1] to [6], wherein the pyridine derivative is at least one selected from the group consisting of a pyridine monomer having one or more functional groups, a bipyridine derivative, a terpyridine derivative, a pyridine oligomer having four or more pyridine rings and having a weight-average molecular weight of less than 10000, and a polymer having a weight-average molecular weight of 10000 or more and having a plurality of pyridine rings.
[8] The catalyst according to any one of [1] to [7], wherein the carbon compound is carbon black.
[9] The catalyst according to any one of [1] to [8], wherein the catalyst is a catalyst for carbon dioxide reduction.
[10] A method for producing a catalyst, comprising sintering a mixture including a metal derivative, a nitrogen-containing derivative and a carbon compound to obtain a catalyst.
[11] The method for producing a catalyst according to [10], wherein the mixture is sintered at 250°C or more and 500°C or less.
[12] A catalyst including a cobalt oxide, a nitrogen-containing part and a carbon-support part, wherein the cobalt oxide and the nitrogen-containing part are supported on the carbon-support part.
[13] The catalyst according to [12], wherein the catalyst includes CoO as the cobalt oxide and includes at least one selected from the group consisting of a pyridine ring structure, an imidazole ring structure and a triazole ring structure, as the nitrogen-containing part.
[14] The catalyst according to [12] or [13], wherein the nitrogen-containing part is a pyridine ring structure.
[15] The catalyst according to any one of [12] to [14], wherein the catalyst is obtained by heat-treating a mixture including a cobalt salt, a nitrogen-containing derivative and a carbon compound.
[16] The catalyst according to [15], wherein the catalyst is obtained by heat-treating of the mixture at 250°C or more and 500°C or less.
[17] An electrode including the catalyst according to any one of [1] to [9] and [12] to [16], and an electrode base material to which the catalyst is attached.
[18] A laminated assembly including a first electrode, an ion exchange membrane and a second electrode in the order presented, wherein the first electrode is the electrode according to [17].
[19] The laminated assembly according to [18], wherein
   the first electrode includes the catalyst and a catalyst additive, and
   the ion exchange membrane is a cation exchange membrane and the catalyst additive is a cation conducting compound, or
   the ion exchange membrane is an anion exchange membrane and the catalyst additive is an anion conducting compound.
[20] A laminated assembly including a first electrode, an ion exchange membrane and a second electrode in the order presented, wherein
   the first electrode includes a catalyst containing a metal-nitrogen element bond, and a catalyst additive, and
   the ion exchange membrane is a cation exchange membrane and the catalyst additive is a cation conducting compound, or
   the ion exchange membrane is an anion exchange membrane and the catalyst additive is an anion conducting compound.
[21] The laminated assembly according to [19] or [20], wherein
   the second electrode includes a second catalyst and a catalyst additive, and
   the ion exchange membrane is a cation exchange membrane and the catalyst additive in the second electrode is a cation conducting compound, or
   the ion exchange membrane is an anion exchange membrane and the catalyst additive in the second electrode is an anion conducting compound.
[22] The laminated assembly according to any one of [19] to [21], wherein
   the ion exchange membrane is a cation exchange membrane, and
   the catalyst additive is a compound having at least one functional group selected from the group consisting of a sulfonyl group, a phosphoric group, a hydroxyl group and a silicic group.
[23] The laminated assembly according to any one of [19] to [21], wherein
   the ion exchange membrane is an anion exchange membrane, and
   the catalyst additive has at least one functional group selected from the group consisting of a pyridinium group, an imidazolium group, an amino group and an ammonium group.
[24] The laminated assembly according to any one of [19] to [23], wherein
   the first electrode includes an electrode base material,
   a catalyst composition including the catalyst and the catalyst additive is held by the electrode base material in the first electrode, and
   a content of the catalyst additive in the catalyst composition is 10 mass% or more and 50 mass% or less.
[25] A carbon dioxide reduction apparatus including the catalyst according to any one of [1] to [9] and [12] to [16], the electrode according to [17], or the laminated assembly according to any one of [18] to [24].

### Advantageous Effects of Invention

The present invention can provide a catalyst which can be produced without elevating sintering temperature for example, and which can increase conversion efficiency to a specific compound such as carbon monoxide in carbon dioxide reduction, and a carbon dioxide reduction electrode including the catalyst. The present invention can also further provide a laminated assembly and a carbon dioxide reduction apparatus which can increase the conversion efficiency.

The present invention can also provide a catalyst having a specific structure, which can thus increase conversion efficiency to a specific compound such as carbon monoxide and in faraday efficiency in generation of a specific compound such as carbon monoxide, in carbon dioxide reduction, as well as a carbon dioxide reduction electrode, a laminated assembly and a carbon dioxide reduction apparatus each including the catalyst.

### [Brief Description of Drawings]

[Fig. 1] It is a schematic view illustrating a specific example of the carbon dioxide reduction apparatus of the present invention.
[Fig. 2] It is a schematic view illustrating another specific example of the carbon dioxide reduction apparatus of the present invention.
[Fig. 3] It illustrates a particle size distribution of cobalt oxide included in a catalyst of Example 50.
[Fig. 4] It illustrates a particle size distribution of cobalt oxide included in a catalyst of Example 57.

### Description of Embodiments

### [First embodiment]

Hereinafter, a first embodiment of the present invention will be described in more detail.

### <Catalyst>

A catalyst according to the first embodiment of the present invention is a catalyst (hereinafter, sometimes referred to as "first catalyst") obtained by sintering a mixture (hereinafter, referred to as "catalyst raw material mixture") including a metal derivative, a nitrogen-containing derivative and a carbon compound. The first catalyst, in which the metal derivative and the nitrogen-containing derivative are used, thus allows a metal-nitrogen element bond derived from these derivative components to be formed in the catalyst. The carbon compound serves as a support in the catalyst, and the component derived from the metal derivative and the nitrogen-containing derivative is supported on the carbon compound. The first catalyst, which has the foregoing structure, is used for a carbon dioxide reduction catalyst, thereby efficiently reducing carbon dioxide to a specific compound such as carbon monoxide, resulting in an increase in conversion efficiency.

### (Metal derivative)

Examples of the metal element in the metal derivative preferably include metal elements of Groups 7 to 12. The metal element of Groups 7 to 12 serves as a catalytically active site which allows a reduction reaction to occur in the first catalyst. These metals can be used to thereby improve the above conversion efficiency to carbon monoxide or the like in use of the first catalyst for a carbon dioxide reduction electrode.

Preferable specific examples of the metal element of Groups 7 to 12 include Mn, Fe, Ni, Ru, Co, Rh, Cu, Zn, Ag, Au, Pd, Ir, Pt and Os, in particular, Co, Fe and Ni are more preferable and Co is particularly preferable. These metal elements are used to thereby easily allow for an increase in conversion efficiency and also easily allow for production of a catalyst high in catalytic activity according to a production method described below. Co is used, and therefore not only faraday efficiency can be enhanced, but also current density is easily increased, in generation of a specific compound such as carbon monoxide. Additionally, carbon dioxide can be reduced at a high efficiency even under an acidic environment. The metals for use in the metal derivative may be used singly or in combinations of two or more thereof.

The metal derivative preferably includes a metal ion. The metal derivative may be used in the form of, for example, a metal salt. Examples of the metal salt include metal nitrate, metal sulfate, metal chloride, metal bromide, metal iodide and metal acetate, and in particular, metal nitrate is preferable. Specifically, preferable are cobalt nitrate (Co(NO₃)₂), nickel nitrate (Ni(NO₃)₂), iron nitrate (Fe(NO₃)₂), manganese nitrate (Mn(NO₃)₂), copper nitrate (Cu(NO₃)₂) and zinc nitrate (Zn(NO₃)₂). The metal salts may be used singly or in combinations of two or more thereof. That is, the metal derivative preferably includes one or more selected from the group consisting of a nitrate ion, a sulfate ion, a chloride ion, a bromide ion, an iodide ion and a hydroxide ion, and in particular, preferably includes a nitrate ion. The metal salt may be in the form of a hydrate.

The content of the metal derived from the metal derivative in the catalyst raw material mixture is preferably 0.1 mass% or more and 10 mass% or less based on the total amount of the catalyst raw material mixture. In a case where the content is in the above range, the metal is included in the catalyst without being aggregated and an appropriate amount of a catalytically active site is formed. Thus, the catalyst, when used for a carbon dioxide reduction electrode, is easily increased in, for example, conversion efficiency to a specific compound such as carbon monoxide.

The amount of the metal is more preferably 0.5 mass% or more, further preferably 1.0 mass% or more, still further preferably 1.9 mass% or more, and more preferably 5.0 mass% or less, further preferably 4.0 mass% or less from the viewpoint of, for example, conversion efficiency. The total amount of the catalyst raw material mixture means the total amount of the solid content of the catalyst raw material mixture, and corresponds to such an amount from which the amount of a volatile component is removed in a case where the volatile component is compounded into the catalyst raw material mixture in the course of production.

### (Nitrogen-containing derivative)

The nitrogen-containing derivative for use in the present invention is a compound containing nitrogen which can be taken together with the metal element of the metal derivative to form a bond such as a coordinate bond. Specific examples of the nitrogen-containing derivative include a compound including a nitrogen-containing aromatic ring having a nitrogen element as a constituent element of the aromatic ring. Specific examples of the nitrogen-containing derivative include a pyridine derivative, an imidazole derivative, a pyrazole derivative and a triazole derivative. The compounds may be used singly or in combinations of two or more thereof.

In particular, the nitrogen-containing derivative is preferably any selected from the group consisting of a pyridine derivative, an imidazole derivative and a triazole derivative, particularly preferable a pyridine derivative, from the viewpoint of, for example, the above conversion efficiency. That is, the catalyst of the present invention is particularly preferably obtained by sintering a mixture including a metal derivative, a pyridine derivative and a carbon compound.

### [Pyridine derivative]

The pyridine derivative for use in the present invention is a compound having a pyridine ring. The pyridine derivative may be a compound having one pyridine ring in one molecule, may be a compound having two pyridine rings, may be a compound having three pyridine rings or may be a compound having four or more pyridine rings.

Examples of the compound (pyridine monomer) having one pyridine ring in one molecule include a compound having at least one functional group of, for example, an amino group (-NH₂), an alkyl group and an alkoxy group to a pyridine ring, from the viewpoint that the pyridine derivative is prevented from being sublimated and/or evaporated in sintering (in heating treatment). Examples of the alkyl group include alkyl groups having about 1 to 5 carbon atoms, such as a methyl group, an ethyl group, a butyl group and a pentyl group (amyl group). Examples of the alkoxy group include alkoxy groups having about 1 to 4 carbon atoms, such as a methoxy group and a butoxy group. Specific examples of the pyridine monomer include alkylpyridines such as methylpyridine, ethylpyridine, butylpyridine and pentylpyridine (amylpyridine), alkoxypyridines such as methoxypyridine and butoxypyridine, and aminopyridines such as 4-aminopyridine.

In particular, the pyridine monomer is preferably aminopyridine, more preferably 4-aminopyridine. The pyridine derivative having an amino group, such as 4-aminopyridine, is used to thereby easily increase conversion efficiency in use of the catalyst for a carbon dioxide reduction electrode. The pyridine monomer is also preferably ethylpyridine.

Examples of the compound having two pyridine rings in one molecule include a compound (bipyridine derivative) having a bipyridine backbone where two pyridine rings are directly linked by a carbon-carbon single bond. Examples of the bipyridine derivative preferably include bipyridine, and in particular, more preferably include 2,2'-bipyridine, from the viewpoint of the above conversion efficiency in use for a carbon dioxide reduction electrode. Examples also preferably include a bipyridine derivative having an amino group, specifically include diaminobipyridine, and in particular, more preferably include 4,4'-diamino-2,2'-bipyridine.

Examples of the compound having three pyridine rings in one molecule include a compound (terpyridine derivative) having a terpyridine backbone where three pyridine rings are directly linked by a carbon-carbon single bond. Examples of the terpyridine derivative include terpyridine.

Examples of the compound having four or more pyridine rings in one molecule include a pyridine oligomer having four or more pyridine rings and having a weight-average molecular weight of less than 10000. Examples of the pyridine oligomer include a compound having a polypyridine backbone where pyridine rings are directly linked to each other by a carbon-carbon single bond. Suitable and specific examples thereof include polypyridine. Examples of the polypyridine include poly(2,5-pyridine) and poly(3,5-pyridine), and in particular, more preferably include poly(2,5-pyridine), from the viewpoint of, for example, the above conversion efficiency in use for a carbon dioxide reduction electrode.

The molecular weight of the polypyridine such as poly(2,5-pyridine) is not particularly limited, and the weight-average molecular weight is preferably 500 or more and 8,000 or less, preferably 1,000 or more and 6,000 or less, more preferably 1,500 or more and 5,000 or less.

Examples of the pyridine derivative also include a polymer having a plurality of pyridine rings in one molecule and having a weight-average molecular weight of 10,000 or more. Such a pyridine derivative may have four or more pyridine rings in one molecule. Specifically, such a compound is also preferably polyvinylpyridine, which is a polymer of vinylpyridine, and in particular, is more preferably poly(4-vinylpyridine). Poly(4-vinylpyridine) is used to thereby easily allow for an increase in conversion efficiency or the likes in use for a carbon dioxide reduction electrode.

The polyvinylpyridine such as poly(4-vinylpyridine) preferably has a molecular weight at a certain level or more from the viewpoint of conversion efficiency or the like, has a weight-average molecular weight of 1,000 or more, 10,000 or more for example, preferably 30,000 or more, further preferably 50,000 or more, and has, for example, a weight-average molecular weight of 200,000 or less, preferably 100,000 or less, from the viewpoint of, for example, availability thereof.

The weight-average molecular weight is a value obtained by measurement with gel permeation chromatography (GPC), and polystyrene may be here used as a standard substance.

The pyridine derivative is further preferably, among the above, 4-aminopyridine, 2,2'-bipyridine, poly(2,5-pyridine), or poly(4-vinylpyridine) having a weight-average molecular weight of 10,000 or more. In addition, 4,4'-diamino-2,2'-bipyridine is also preferable.

The pyridine derivative here used is particularly preferably, among the above, poly(4-vinylpyridine) or poly(2,5-pyridine), most preferably poly(4-vinylpyridine), from the viewpoint of a more enhancement in the conversion efficiency or the like.

The pyridine derivatives may be used singly or in combinations of two or more thereof.

### [Imidazole derivative]

The imidazole derivative for use in the present invention is a compound having an imidazole ring. The imidazole derivative may be a compound having one imidazole ring in one molecule, may be a compound having two imidazole rings in one molecule or may be a compound having three or more imidazole rings in one molecule.

Examples of the compound (imidazole monomer) having one imidazole in one molecule include a compound having at least one functional group of, for example, an amino group (-NH₂), an alkyl group, an alkoxy group, a halogen group, an aryl group and an aralkyl group to imidazole, from the viewpoint that the imidazole derivative is prevented from being sublimated or evaporated in sintering (in heating treatment). The compound may have a heterocyclic structure containing an imidazole ring. Specific examples of the alkyl group and the alkoxy group are as described with respect to the pyridine monomer. Examples of the aryl group include a phenyl group and a tolyl group, and examples of the aralkyl group include a benzyl group and a phenethyl group.

Specific examples of the imidazole monomer include 1-methylimidazole, 1-ethylimidazole, 1-propylimidazole, 1-isopropylimidazole, 1-butylimidazole, 1-phenethylimidazole, 2-methylimidazole, 2-ethylimidazole, 2-propylimidazole, 2-isopropylimidazole, 2-butylimidazole, 2-phenylimidazole, 4-methylimidazole, 4-ethylimidazole, 4-propylimidazole, 4-isopropylimidazole, 4-butylimidazole, 4-phenylimidazole, benzimidazole, 1-methylbenzimidazole and bifonazole.

Examples of the compound having two imidazole rings in one molecule include a compound (biimidazole derivative) having an imidazole backbone where two imidazole rings are directly linked by a carbon-carbon single bond. Examples of the imidazole derivative include biimidazole.

Such a compound having a plurality of imidazole rings in one molecule is preferably polyvinylimidazole which is a polymer of vinylimidazole, and in particular, more preferably poly(4-vinylimidazole) or poly(N-vinylimidazole), further preferably poly(4-vinylimidazole). Poly(4-vinylimidazole) is used to thereby easily allow for an increase in conversion efficiency or the like in use for a carbon dioxide reduction electrode.

The polyvinylimidazole such as poly(4-vinylimidazole) preferably has a molecular weight at a certain level or more from the viewpoint of conversion efficiency or the like, and has a weight-average molecular weight of 1,000 or more for example, preferably 10,000 or more, and has a weight-average molecular weight of 200,000 or less for example, preferably 100,000 or less, from the viewpoint of, for example, availability thereof.

The imidazole derivatives may be used singly or in combinations of two or more thereof.

### [Triazole derivative]

The triazole derivative for use in the present invention is a compound having a triazole ring. The triazole derivative may be a compound having one triazole ring in one molecule, may be a compound having two triazole rings in one molecule or may be a compound having three or more triazole rings in one molecule.

Examples of the compound (triazole monomer) having one triazole ring in one molecule include a compound having at least one functional group of, for example, an amino group (-NH₂), an alkyl group and an alkoxy group to a triazole ring, from the viewpoint that the triazole derivative is prevented from being sublimated or evaporated in sintering (in heating treatment). Specific examples of the alkyl group and the alkoxy group are as described with respect to the pyridine monomer.

Examples of the compound having two triazole rings in one molecule include a compound (bitriazole derivative) having a bitriazole backbone where two triazole rings are directly linked by a carbon-carbon single bond. Examples of the bitriazole derivative include bitriazole.

Such a compound having a plurality of triazole rings in one molecule is preferably polyvinyltriazole which is a polymer of vinyltriazole, and in particular, is more preferably poly(1-vinyl-1,2,4-triazole). Poly(1-vinyl-1,2,4-triazole) is used to thereby easily allow for an increase in conversion efficiency or the like in use for a carbon dioxide reduction electrode.

The polyvinyltriazole such as poly(1-vinyl-1,2,4-triazole) preferably has a molecular weight at a certain level or more from the viewpoint of, for example, conversion efficiency, has a weight-average molecular weight of 1,000 or more for example, preferably 10,000 or more, and has a weight-average molecular weight of 200,000 or less for example, preferably 100,000 or less, from the viewpoint of, for example, availability thereof.

The triazole derivatives may be used singly or in combinations of two or more thereof.

### [Pyrazole derivative]

The pyrazole derivative for use in the present invention is a compound having a pyrazole ring. The pyrazole derivative may be a compound having one pyrazole ring in one molecule, may be a compound having two pyrazole rings in one molecule or may be a compound having three or more pyrazole rings in one molecule.

Examples of the compound (pyrazole monomer) having one pyrazole ring in one molecule include a compound having at least one functional group of, for example, an amino group (-NH₂), an alkyl group, an alkoxy group, an aryl group and an aralkyl group to a pyrazole ring, from the viewpoint that the pyrazole derivative is prevented from being sublimated or evaporated in sintering (in heating treatment). Specific examples of the alkyl group and the alkoxy group are as described with respect to the pyridine monomer. Specific examples of the aryl group and the aralkyl group are as described with respect to the imidazole monomer.

Specific examples of the pyrazoles, as a pyrazole monomer, include 1-methylpyrazole, 1-ethylpyrazole, 1-propylpyrazole, 1-isopropylpyrazole, 1-butylpyrazole, 1-phenethylpyrazole, 3-methylpyrazole, 3-ethylpyrazole, 3-propylpyrazole, 3-isopropylpyrazole, 3-butylpyrazole, 3-phenylpyrazole, 1,3-dimethylpyrazole, 1,3-diethylpyrazole, 1,3-dipropylpyrazole, 1,3-isopropylpyrazole, 1,3-dibutylpyrazole and 1,3-diphenethylpyrazole.

Examples of the compound having two pyrazole rings in one molecule include a compound (bipyrazole derivative) having a bipyrazole backbone where two pyrazole rings are directly linked by a carbon-carbon single bond. Examples of the bipyrazole derivative include bipyrazole.

Examples of such a compound having a plurality of pyrazole rings in one molecule include polyvinylpyrazole which is a polymer of vinylpyrazole.

The pyrazole derivatives may be used singly or in combinations of two or more thereof.

The blended amount of the nitrogen-containing derivative compounded in the catalyst raw material mixture is preferably adjusted so that the molar ratio (nitrogen-containing aromatic ring/metal element) of the nitrogen-containing aromatic ring of the nitrogen-containing derivative to the metal element of the metal derivative is 2 or more and 20 or less. Such a range can allow the occurrence of side reaction to be suppressed, resulting in production of a catalyst including an appropriate amount of a metal-nitrogen element bond, and easily allows for an increase in the above conversion efficiency or the like. The molar ratio is more preferably 2 or more, further preferably 4 or more, and more preferably 18 or less, more preferably 15 or less from the viewpoint of, for example, conversion efficiency. The molar ratio here represents the ratio of the number of nitrogen-containing aromatic rings included in the nitrogen-containing derivative to the molar number of the metal element included in the metal derivative.

In a case where the catalyst raw material mixture includes a pyridine derivative, the amount of the pyridine derivative compounded in the catalyst raw material mixture is preferably adjusted so that the molar ratio (pyridine ring/metal element) of the pyridine ring of the pyridine derivative to the metal element of the metal derivative is 2 or more and 20 or less. Such a range can allow the occurrence of side reaction to be suppressed, resulting in production of a catalyst including an appropriate amount of a metal-nitrogen element bond, and easily allows for an increase in the above conversion efficiency or the like. The molar ratio is more preferably 2 or more, further preferably 4 or more, still further preferably 8 or more, and more preferably 18 or less, more preferably 15 or less, further preferably 12 or less from the viewpoint of conversion efficiency. The molar ratio here represents the ratio of the number of pyridine rings included in the pyridine derivative to the molar number of the metal element included in the metal derivative.

### (Carbon compound)

The carbon compound is not particularly limited as long as it can support a sintered product (product obtained by heating treatment) of the metal derivative and the nitrogen-containing derivative such as the pyridine derivative, but it is preferably a conductive carbon compound. The conductive carbon compound is used to thereby allow for an increase in electrical conductivity in a carbon dioxide reduction electrode in use for the electrode and easily allow for an increase in the above conversion efficiency.

More specific examples of the carbon compound include carbon black such as mesoporous carbon, activated carbon, Ketjen black and acetylene black, graphite, a carbon fiber, graphene, and a carbon nanotube, and in particular carbon black is preferable, and such carbon black is further preferably conductive carbon black.

The content of the carbon compound in the catalyst raw material mixture is not particularly limited and is, for example, 10 mass% or more and 90 mass% or less, preferably 15 mass% or more and 80 mass% or less, more preferably 20 mass% or more and 70 mass% or less based on the total amount of the catalyst raw material mixture. The content of the carbon compound can be in the above range to thereby not only allow the catalytic activity to be favorably maintained, but also allow the sintered product of the metal derivative and the pyridine derivative to be properly supported.

The first catalyst may be in the form of a powder or particle. The first catalyst, which is in the form of a powder or particle, not only is easily attached to the electrode base material, but also is easily increased in contact area with carbon dioxide, easily resulting in an enhancement in the above conversion efficiency. The surface area of the first catalyst is, for example, 50 m²/g or more and 4000 m²/g or less, preferably 100 m²/g or more and 3000 m²/g or less. The average particle size of the first catalyst is, for example, 1 nm or more and 1000 nm or less, preferably 5 nm or more and 500 nm or less. The surface area of the catalyst can be measured according to, for example, gas adsorption analysis. The average particle size of the catalyst can be measured according to, for example, dynamic light scattering analysis or electron microscope observation.

### (Method for producing first catalyst)

The first catalyst can be produced by sintering a catalyst raw material mixture including a metal derivative, a nitrogen-containing derivative such as a pyridine derivative, and a carbon compound. The catalyst raw material mixture is here preferably heated to and sintered at a sintering temperature of 200°C or more and 550°C or less. The sintering temperature can be in the above range to thereby not only inhibit any unnecessary by-product from being produced, but also allow a metal-nitrogen element bond derived from the metal derivative and the nitrogen-containing derivative to be properly produced, and allow a proper catalytic activity to be imparted to the first catalyst. The sintering temperature, which is equal to or less than the upper limit value, thus easily results in industrial practical use.

The sintering temperature is preferably 250°C or more and 500°C or less, more preferably 280°C or more and 470°C or less, further preferably 300°C or more and 450°C or less from the viewpoints of an improvement in catalytic activity and an increase in the above conversion efficiency in use for a carbon dioxide reduction electrode, and from the viewpoint of practical use.

The sintering is preferably performed under an atmosphere of an inert gas such as an argon or nitrogen gas.

The catalyst raw material mixture is sintered at the above sintering temperature to thereby not only enable a metal-nitrogen element bond to be formed, but also allow components derived from the metal derivative and the nitrogen-containing derivative to be supported on the carbon compound, and the time for the sintering (sintering time) is not particularly limited and is, for example, 0.5 hours or more and 10 hours or less, preferably 1 hour or more and 8 hours or less, more preferably 2 hours or more and 5 hours or less.

The catalyst raw material mixture to be sintered is preferably in the form of a powder or particle. The catalyst raw material mixture, which is in the form of a powder or particle, can thus be sintered to thereby obtain a catalyst in the form of a powder or particle. The catalyst raw material mixture to be sintered more preferably consists of the metal derivative, the nitrogen-containing derivative and the carbon compound.

The catalyst raw material mixture may be obtained by, for example, diluting the metal derivative, the nitrogen-containing derivative and the carbon compound with a diluent solvent to produce a diluent of the catalyst raw material mixture, and drying the diluent. The catalyst raw material mixture may be obtained, for example, in the form of a powder or particle.

Such each component (metal derivative, nitrogen-containing derivative and carbon compound) is preferably dispersed or dissolved in a diluent solvent in the diluent of the catalyst raw material mixture. Such each component can be dispersed or dissolved in a diluent solvent, thereby obtaining a catalyst raw material mixture where such each component is homogeneously mixed.

The method for obtaining the diluent of the catalyst raw material mixture is not particularly limited, and the diluent may be obtained by, for example, first adding and dispersing the nitrogen-containing derivative to and in a dispersion medium, and further adding the metal derivative and the carbon compound to such a dispersion liquid.

The diluent solvent used for diluting the catalyst raw material mixture can be any of water and an organic solvent, and an organic solvent is preferable. Examples of the organic solvent include an ester-based solvent, a ketone-based solvent, an ether-based solvent, an alcohol-based solvent, glycol ethers, an amide-based solvent, a nitrile-based solvent, a carbonate-based solvent, halogenated hydrocarbon, hydrocarbon, a sulfone-based solvent, sulfoxides and formamide, without any particular limitation. Preferable specific examples include alcohol-based solvents such as methanol, ethanol and isopropanol, and ketone-based solvents such as acetone and methyl ethyl ketone. The diluent solvent here used may also be a mixed solvent of such an organic solvent and water.

The concentration of the diluent of the catalyst raw material mixture is not particularly limited, and is, for example, 0.01 g/L or more and 50 g/L or less, preferably 1 g/L or more and 10 g/L or less.

### <Electrode>

An electrode (first electrode) according to the first embodiment of the present invention is an electrode including the first catalyst and an electrode base material to which the first catalyst is attached. The first electrode is a carbon dioxide reduction electrode for use in carbon dioxide reduction.

The first electrode is obtained by, for example, attaching the catalyst (first catalyst) obtained by sintering the catalyst raw material mixture including the metal derivative, the nitrogen-containing derivative and the carbon compound in advance, to the electrode base material. The attaching here corresponds to an aspect where the catalyst is physically fixed to the electrode base material, and atom constituting the electrode base material is not chemically linked to atom constituting the catalyst. Accordingly, even if the electrode base material includes a carbon compound such as porous carbon, such a carbon compound by itself has neither the above metal-nitrogen element bond, nor any metal -carbon element bond. The carbon element here mentioned is a carbon element constituting the carbon compound such as porous carbon, and the metal is a metal derived from the metal derivative.

In the first electrode according to the present embodiment, the catalyst is not chemically linked to the electrode base material, but attached, as described above, and thus a sintered product of the metal derivative and the nitrogen-containing derivative is be properly supported on the carbon compound included in the catalyst, easily resulting in an enhancement in conversion efficiency to a specific reduced product such as carbon monoxide.

A sintering apparatus necessary for sintering a powder is a relatively small-scale apparatus as compared with that for sintering with respect to every electrode base material, and thus can be reduced in sintering cost. Furthermore, no electrode base material is needed to be subjected to heat treatment, and a material low in heat resistance can also be used for the electrode base material.

The first catalyst may be attached to the electrode base material, together with fluorine compound such as perfluoroethylenesulfonic acid ("Nafion" (the trademark of DuPont) as a commercially available product), polytetrafluoroethylene (PTFE), a tetrafluoroethylene oligomer (TFEO), graphene fluoride ((CF)n), and pitch fluoride (FP). That is, the first catalyst may be mixed with a fluorine compound, and attached, in a form of a mixture (catalyst composition), to the electrode base material. The fluorine compound is used as a water repellent, resulting in an enhancement in electrochemical reaction efficiency. The fluorine compound also serves as a binder in attachment of the first catalyst to the electrode base material. Furthermore, the fluorine compound also serves as an ion conductor, resulting in an enhancement in electrochemical reaction efficiency. The fluorine compounds may be used singly or in combinations of two or more thereof.

The first catalyst (or catalyst composition) in the first electrode may be formed, in the form of a catalyst layer, on the surface of the electrode base material in a layered manner by coating with a coating liquid including the catalyst, as described below. The catalyst layer may be formed in a layered manner so that a part of or the entire of the electrode base material is internally impregnated therewith partially or fully in the thickness direction thereof, and may be formed, for example, toward the interior of the electrode base material from the surface in a layered manner. The catalyst layer may be appropriately porous.

### (Electrode base material)

The electrode base material is not particularly limited as long as it is a base material conventionally used for carbon dioxide reduction electrodes, examples thereof include a carbon base material, a metal base material and a metal oxide base material, and the material preferably has conductivity. The base material is preferably a porous body. In the present invention, the electrode base material, which has conductivity and which is a porous body, can be thus used in a gas diffusion electrode. The gas diffusion electrode can allow carbon dioxide to be properly dispersed therein, thereby reducing carbon dioxide at a high efficiency.

The base material is preferably a carbon base material, more preferably porous carbon, among the materials described above. Specific examples of such porous carbon include a carbon non-woven fabric. The carbon non-woven fabric is not particularly limited, and a known carbon non-woven fabric can be used. For example, product commercially available as a carbon non-woven fabric for fuel cells can be used, and examples include "Torayca" (registered trademark) carbon paper manufactured by Toray Industries Inc., "AvCarb 1071HCB" manufactured by New Metals and Chemicals Corporation, and BC Series manufactured by SGL.

Examples of the metal base material include a metal mesh, and examples of the metal here used include gold, silver, platinum, nickel, titanium and chromium. Examples of the metal oxide for use in the metal oxide base material include indium oxide, tin oxide, tin-doped indium oxide and fluorine-doped tin oxide.

### (Method for producing electrode)

The electrode (first electrode) according to the first embodiment of the present invention may be produced by producing the catalyst (first catalyst) in advance and attaching the first catalyst produced, to the electrode base material, as described above. The first catalyst may be mixed with any component other than the catalyst, such as a fluorine compound, and attached, in the form of a mixture (catalyst composition), to the electrode base material.

The method for attaching the catalyst to the electrode base material is not particularly limited, and examples include a method involving coating the electrode base material with a diluent obtained by diluting the first catalyst and any component other than the catalyst, if necessary, added, such as a fluorine compound, with a diluent solvent, and drying the resultant, and a method involving immersing the electrode base material in the diluent and drying the resultant.

The method for coating the electrode base material with the diluent may be any method without any particular limitation, and may be made by coating using any of various coating apparatuses or coating according to spray coating or the like. The method for immersing the electrode base material in the diluent is not particularly limited, and may be made by immersing the electrode base material in the diluent prepared in advance, may be made by immersing the entire electrode base material in the diluent, or may be made by immersing a part of the electrode base material in the diluent.

The diluent is preferably a dispersion liquid obtained by dispersing the catalyst or the catalyst and any component other than the catalyst in a diluent solvent, and the diluent solvent here used may be any of water and an organic solvent. The organic solvent is as described above, and may be preferably an alcohol-based solvent, a ketone-based solvent, a nitrile-based solvent or the like. A mixed solution of the organic solvent and water may also be adopted.

### <Laminated assembly>

A laminated assembly according to the first embodiment of the present invention is a laminated assembly including the first electrode, an ion exchange membrane and a second electrode in the order presented. The configuration of the first electrode is as described above. The laminated assembly includes the first electrode and the second electrode joined with the ion exchange membrane being interposed, and thus a membrane-electrode assembly is constituted. The first electrode constitutes a cathode and the second electrode constitutes an anode in the laminated assembly.

The laminated assembly is used in a carbon dioxide reduction apparatus, and on the first electrode a reaction of reduction of carbon dioxide (carbon dioxide reduction reaction) is performed, and on the second electrode an oxidation reaction is performed. The carbon dioxide reduction reaction performed on the first electrode is a reaction for conversion of carbon dioxide to a reduced product, preferably a reaction for conversion of carbon dioxide to carbon monoxide, as described below. The laminated assembly according to the first embodiment, in which the first electrode includes the above first catalyst, thus allows for an increase in efficiency of conversion which is conversion of carbon dioxide to a specific reduced product such as carbon monoxide in the first electrode.

### (Second electrode)

The second electrode is an electrode including an oxidation reaction catalyst (hereinafter, also referred to as "second catalyst") which catalyzes an oxidation reaction. The oxidation reaction catalyst here used can be, for example, a material including one or more selected from the group consisting of, for example, various metals, metal compounds and carbon compounds.

The oxidation reaction catalyst (second catalyst) preferably includes one or more elements of Groups 8 to 12, as metal(s), and examples of metals include iron, gold, copper, nickel, platinum, palladium, ruthenium, osmium, cobalt, rhodium and iridium. The metal compound here used can be metal compound such as inorganic metal compounds and organic metal compounds of the metals, and specific examples include metal halide, metal oxide, metal hydroxide, metal nitrate, metal sulfate, metal acetate, metal phosphate, metal carbonyl and metal acetylacetonate.

The metal element for use in the metal or the metal compound is preferably, for example, iridium, rhodium, palladium, platinum, nickel, cobalt or ruthenium. More specifically, the metal is more preferably any of iridium, rhodium, palladium and ruthenium, and the metal oxide is more preferably any of iridium oxide, ruthenium oxide, nickel cobalt oxide and nickel iron oxide.

The metals or the metal compound may be used singly or in combinations of two or more thereof.

The carbon compound is preferably a conductive carbon compound, and any of various carbon materials having electrical conductivity can be used. Specific examples include carbon blacks such as mesoporous carbon, activated carbon, Ketjen black and acetylene black, graphite, a carbon fiber, carbon paper, and a carbon whisker.

The oxidation reaction catalyst preferably includes at least any of the metal or the metal compound, among the above, more preferably includes at least any of the metal or the metal compound, and the carbon compound, further preferably includes the metal and the carbon compound. In a case where the metal or the metal compound and the carbon compound are included, the metal or the metal compound may be supported on the carbon compound.

In a case where the oxidation reaction catalyst includes the metal or the metal compound and the carbon compound, it can be obtained by sintering a mixture including a metal derivative and the carbon compound.

The metal derivative for use as a raw material of the oxidation reaction catalyst is sintered and thus formed into the metal or the metal compound, and preferably includes a metal ion. The metal derivative may be used in the form of, for example, a metal salt. Examples of the metal salt include metal nitrate, metal sulfate, metal chloride, metal bromide, metal iodide and metal acetate.

The temperature in the sintering (sintering temperature) is not particularly limited, and is, for example, 200°C or more and 1500°C or less, preferably 250°C or more and 1000°C or less. The sintering time is, for example, 0.5 hours or more and 10 hours or less, preferably 1 hour or more and 6 hours or less. The sintering may be performed under an atmosphere of an inert gas such as an argon or nitrogen gas, or may be performed under a hydrogen gas atmosphere.

The second electrode preferably includes not only the oxidation-reduction reaction catalyst (second catalyst), but also an electrode base material. Specific examples of the electrode base material are the same as specific examples described in the first electrode. The electrode base material in the second electrode preferably has conductivity, and is also preferably a porous body. The electrode base material in the second electrode is preferably a carbon base material, more preferably porous carbon, as in the first electrode (namely, carbon dioxide reduction electrode). Specific examples of such porous carbon are as described with respect to the first electrode.

The second catalyst in the second electrode may be held by the electrode base material. The second electrode may be obtained by producing the second catalyst in advance and attaching the catalyst produced, to the electrode base material.

The second catalyst may also be attached to the electrode base material, together with any component other than the second catalyst, such as a fluorine compound. Specific examples of the fluorine compound are as described above. That is, the second catalyst may be mixed with the fluorine compound and attached, in a form of a mixture (catalyst composition), to the electrode base material. The fluorine compound is used in a water repellent, resulting in an enhancement in electrochemical reaction efficiency. The fluorine compound also serves as a binder in attachment of the second catalyst to the electrode base material. The method for attaching the second catalyst or the second catalyst and any component other than the second catalyst to the electrode base material is as described with respect to the first electrode.

### (Ion exchange membrane)

The ion exchange membrane for use in the laminated assembly is a solid membrane, and examples include a cation exchange membrane through which any cation such as proton can penetrate and an anion exchange membrane through which any anion such as a hydroxide ion can penetrate.

Examples of the cation exchange membrane include that having at least any of a sulfonyl group, a carboxyl group, a phosphoric group and a silicic group, as a functional group. Examples of the cation exchange membrane having a sulfonyl group as a functional group include respective cation exchange membranes of a hydrocarbon resin-based polysulfonic acids, such as polyethylenesulfonic acid or a fullerene-crosslinked polysulfonic acids, and a fluororesin-based sulfonic acids, such as perfluoroethylenesulfonic acid. Examples of the perfluoroethylenesulfonic acid include a copolymer of tetrafluoroethylene and perfluoro[2-(fluorosulfonylethoxy)propylvinylether], and examples of a commercially available product include "Nafion" (the trademark of DuPont).

Examples of that having a carboxyl group as a functional group include polycarboxylic acids such as polyacrylic acid. That having a phosphoric group or a silicic group as a functional group, which is here used, can also be any of heteropoly acids such as silicotungstic acid and phosphotungstic acid. Furthermore, the cation exchange membrane here used can also be, for example, phosphate glasses like SiO₂-P₂O₅ or ceramics such as perovskite-type oxide.

Examples of the anion exchange membrane include respective anion exchange membranes of a resin having a quaternary ammonium salt like poly(styrylmethyltrimethylammonium chloride), polyethers, and a polymer having an imidazolium group. Examples of such a resin having an ammonium salt include "FAA-3-50" from FuMA-Tech GmbH and "TM1 Durion Grade" from Orion. Examples of the polymer having an imidazolium group include a styrene-based polymer having an imidazolium group, and specifically include a copolymer (PSMIM) of styrene and 1-(p-vinylbenzyl)-3-methylimidazolium, a copolymer (PSTMIM) of styrene and 1-(p-vinylbenzyl)-tetramethyl-imidazolium, and a copolymer (PSDMIM) of styrene and 1-(p-vinylbenzyl)-2,3-dimethyl-imidazolium.

### (Method for producing laminated assembly)

The laminated assembly can be produced by joining the respective first and the second electrodes constituting the first and the second electrodes to both surfaces of the ion exchange membrane. The method for joining the first and the second electrodes to the ion exchange membrane is not particularly limited, and production may be made by, for example, sequentially stacking the first electrode, the ion exchange membrane and the second electrode and subjecting the resultant to press-forming.

### [Cobalt-based catalyst]

Next, a second embodiment of the present invention is described. A catalyst according to the second embodiment of the present invention has a metal element and a nitrogen element as in the first embodiment, and is a cobalt-based catalyst including a cobalt element as the metal element. The cobalt-based catalyst according to the present embodiment is a catalyst including cobalt oxide, a nitrogen-containing part and a carbon-support part, in which the cobalt oxide and the nitrogen-containing part are supported on the carbon-support part.

The cobalt-based catalyst having the foregoing configuration is used in a carbon dioxide reduction catalyst, thereby efficiently reducing carbon dioxide to a specific compound such as carbon monoxide, resulting in an increase in conversion efficiency. Additionally, faraday efficiency is increased and current density is also easily increased, in conversion of carbon dioxide to a specific compound such as carbon monoxide. Additionally, carbon dioxide can be reduced at a high efficiency even under an acidic environment.

The nitrogen-containing part includes a nitrogen element coordinated to the cobalt oxide. Accordingly, the cobalt-based catalyst may have a structure where nitrogen of the nitrogen-containing part is coordinated to cobalt of the cobalt oxide supported on the carbon-support part. The nitrogen-containing part preferably includes a nitrogen-containing aromatic ring structure from the viewpoints of the above conversion efficiency, faraday efficiency and current density, and accordingly, nitrogen constituting an aromatic ring is preferably coordinated to cobalt of the cobalt oxide. The cobalt oxide is preferably CoO and cobalt to which nitrogen is coordinated is preferably divalent, as described below.

Examples of the nitrogen-containing aromatic ring structure include nitrogen-containing aromatic ring structures such as a pyridine ring structure, an imidazole ring structure, a pyrazole ring structure and a triazole ring structure. In particular, a pyridine ring structure, an imidazole ring structure and a triazole ring structure are preferable, and a pyridine ring structure is particularly preferable. It is presumed that cobalt is coordinated to nitrogen of a pyridine ring structure to result in a reduction in activation energy of a reaction intermediate, and thus, for example, conversion efficiency is increased.

Accordingly, the nitrogen-containing part may be derived from a nitrogen-containing derivative having a nitrogen-containing aromatic ring, such as a pyridine derivative, an imidazole derivative, a pyrazole derivative or a triazole derivative, and in particular, is preferably derived from a pyridine derivative, an imidazole derivative or a triazole derivative, particularly preferably derived from a pyridine derivative. The detail of the nitrogen-containing derivative is as described in the first embodiment.

The cobalt-based catalyst is produced by, for example, heat-treating a mixture including the nitrogen-containing derivative, as described below, and the treatment temperature is here low. Accordingly, in a case where the nitrogen-containing derivative has a nitrogen-containing aromatic ring, such a nitrogen-containing aromatic ring structure also remains in the cobalt-based catalyst and thus the nitrogen-containing part is composed of such a nitrogen-containing aromatic ring structure derived from the nitrogen-containing derivative.

The cobalt oxide in the cobalt-based catalyst is preferably CoO. The cobalt oxide is composed of divalent cobalt (Co(II)), thereby enabling the above conversion efficiency, faraday efficiency and the like to be increased.

It can be confirmed according to X-ray photoemission spectroscopy (XPS) that the cobalt-based catalyst has a nitrogen-containing aromatic ring structure such as a pyridine ring structure. For example, it can be confirmed from a peak derived from N1s, detected around 398.4 eV in XPS, that the cobalt-based catalyst has a pyridine ring structure.

It can also be confirmed according to X-ray photoemission spectroscopy (XPS) that a nitrogen element is coordinated to the cobalt element of the cobalt oxide to form Co-N (cobalt-nitrogen element bond) and that the cobalt oxide is divalent. Accordingly, in a case where the cobalt-based catalyst is subjected to measurement with XPS, a peak with respect to N which is in the state of a Co-N bond is preferably detected and here Co of Co-N is preferably divalent. Such a peak with respect to N which is in the state of a Co-N bond is detected around, for example, 399.7 eV in a case where a nitrogen element constituting Co-N is an element constituting a pyridine ring.

The cobalt-based catalyst may also include cobalt (cobalt metal) in the form of a metal. The cobalt metal may have, for example, crystallinity. The cobalt-based catalyst, when includes a cobalt metal, preferably has a core-shell structure where the cobalt metal serves as a core and the cobalt oxide is disposed around the core so as to cover the cobalt metal. In a case where the cobalt-based catalyst has such a core-shell structure, it is presumed that the cobalt-based catalyst is enhanced in conductivity and easily enhances, for example, the rate of reduction of carbon dioxide. The core-shell structure may be here particulate and supported on the carbon-support part.

The cobalt-based catalyst which includes divalent cobalt oxide can be detected according to X-ray diffraction measurement (XRD) and X-ray photoemission spectroscopy (XPS). For example, in a case where any diffraction peaks derived from the cobalt oxide, for example, peaks at diffraction angles (2θ) around 36.4°, 42.2° and 61.3° are observed in XRD, it can be said that the cobalt-based catalyst has a crystal structure of the cobalt oxide. In a case where peaks derived from Co2p_{3/2} are observed around 780.0, 782.1, 785.5 and 786.5 eV in XPS, it can be said that the cobalt-based catalyst includes the cobalt oxide.

The cobalt-based catalyst which includes the cobalt metal can be detected according to, for example, X-ray diffraction measurement (XRD) or X-ray photoemission spectroscopy (XPS). For example, in a case where any diffraction peaks derived from such metal cobalt, for example, peaks at diffraction angles (2θ) around 44.5° and 51.9° are observed in XRD, it can be said that the cobalt-based catalyst has a crystal structure of the cobalt metal. In a case where a peak derived from Co2p_{3/2} is observed around 778.2 eV in XPS, it can be said that the cobalt-based catalyst includes the cobalt metal.

Whether or not the cobalt metal is included may be confirmed by a combination of XRD and XPS. Such a combination can allow for detection of not only whether or not the cobalt metal is included, but also whether or not the cobalt metal has a core-shell structure. That is, XPS has a penetration length of about several nanometers, and thus may not detect any cobalt metal in a case where the cobalt metal forms the core of a core-shell structure even if the cobalt-based catalyst includes the cobalt metal. On the other hand, XRD can detect a crystal structure of the cobalt metal as a core even if there is a core-shell structure where the core is the cobalt metal. Accordingly, in a case where XPS exhibits peak(s) of CoO and does not exhibit any peaks of the cobalt metal and XRD detects the cobalt metal, the cobalt-based catalyst can be determined to have a core-shell structure where the cobalt metal serves as a core and the cobalt oxide serves as a shell. The cobalt-based catalyst is thus preferably detected with respect to peak(s) derived from the cobalt metal in XRD, and detected with respect to peak(s) derived from CoO but no peak derived from the cobalt metal in XPS.

While XRD detects cobalt metal having crystallinity but does not detect amorphous cobalt metal, the cobalt metal forming the core of the core-shell structure is not necessarily required to have crystallinity and may be amorphous.

The position of detection of each of the above peaks in XPS is one example, and such each peak may be fitted and assigned based on the reference peak determined according to an ordinary method. The error of the position of detection of such each peak is generally about 2 to 5%.

Similarly, the position of detection of each of the diffraction peaks in XRD is also one example, and the error of the position of detection of such each peak is generally about ±6%.

The cobalt oxide may be in the form of a fine particle. The cobalt oxide may be singly in the form of a fine particle or may be in the form of a fine particle as a composite (for example, the core-shell structure) with the cobalt metal, and the composite with the cobalt metal is herein encompassed in a "fine particulate cobalt oxide", unless particularly noted.

The fine particulate cobalt oxide is not particularly limited, is a nano-order particle (namely, less than 1 µm), and preferably have a particle size of 100 nm or less, more preferably 0.1 nm or more and 50 nm or less. The cobalt oxide has such a particle size and has a nano structure, and thus is increased in active area and easily enhances various performances of the catalyst. The particle size is obtained by acquiring a distribution image of cobalt according to TEM-EDX and determining the diameter of each particle in the image. The particle size of the cobalt oxide means the equivalent circular area diameter obtained by determining the area of each particle in a distribution image, assuming such each particle as a circle and calculating the diameter thereof from the area.

The particulate cobalt oxide may have a particle size appropriately distributed in the above range, and preferably has a maximum particle size of 10 nm or more, more preferably 15 nm or more. In a case where the maximum particle size is equal to or more than the lower limit value, the cobalt-based catalyst easily has the above core-shell structure. The maximum particle size is preferably 100 nm or less, more preferably 50 nm or less.

The particulate cobalt oxide preferably has an average particle size of 0.1 nm or more and 50 nm or less, more preferably 0.2 nm or more and 30 nm or less. In a case where the average particle size is in the range, the active area is increased and the catalyst is easily enhanced in various performances. The average particle size may be determined by calculating the arithmetic average value of the particle sizes of all particles displayed in an image acquired according to TEM-EDX.

The cobalt-based catalyst in the second embodiment includes the cobalt oxide and the nitrogen-containing part supported on the carbon-support part, as described above, and the carbon-support part may include a carbon compound in the form of a powder or particle and therefore the cobalt-based catalyst may also be in the form of a powder or particle. The cobalt-based catalyst which is in the form of a powder or particle not only is easily attached to the electrode base material, but also is easily increased in contact area with carbon dioxide, easily resulting in an enhancement in, for example, the above conversion efficiency.

The detail of the carbon compound in the second embodiment is the same as in the first embodiment, and the detailed description thereof is omitted. Specific numerical ranges and suitable numerical ranges of the surface area and the average particle size of the cobalt-based catalyst are also the same as those in the above first catalyst, and the description thereof is omitted.

### (Method for producing cobalt-based catalyst)

The cobalt-based catalyst can be obtained by heat-treating (for example, sintering) a catalyst raw material mixture including a cobalt derivative, a nitrogen-containing derivative such as a pyridine derivative, and a carbon compound. It is noted that the cobalt-based catalyst can be produced by any producing methods as long as it has the above-mentioned structure, and may be produced with an electrochemical or chemical oxidative synthesis method or the like. A producing method with a heat treatment will be explained in detail below.

The cobalt derivative for use in the second embodiment corresponds to the metal derivative in the first embodiment, in which the metal is cobalt. Accordingly, the cobalt derivative may be a cobalt salt and is preferably a divalent cobalt salt. Examples of a specific cobalt salt include cobalt nitrate, cobalt sulfate, cobalt chloride, cobalt bromide, cobalt iodide and cobalt acetate, and in particular, cobalt nitrate (Co(NO₃)₂) is preferable. That is, the metal derivative may include one or more selected from the group consisting of a nitrate ion, a sulfate ion, a chloride ion, a bromide ion, an iodide ion and a hydroxide ion, and in particular, preferably contains a nitrate ion. The metal salt may be in the form of a hydrate. The cobalt derivatives may be used singly or in combinations of two or more thereof.

The content of the metal (namely, the content of the cobalt element) derived from the cobalt derivative in the catalyst raw material mixture in the second embodiment is the same as the content of the metal, represented in the first embodiment.

The nitrogen-containing derivative and the carbon compound are as represented in the first embodiment. The molar ratio (nitrogen-containing aromatic ring/cobalt element) of the nitrogen-containing aromatic ring of the nitrogen-containing derivative to the cobalt element of the cobalt derivative in the catalyst raw material mixture in the second embodiment is the same as the molar ratio of nitrogen-containing aromatic ring/metal element, represented in the first embodiment. The molar ratio (pyridine ring/cobalt element) of the pyridine ring of the pyridine derivative to the cobalt element of the cobalt derivative is the same as the molar ratio of pyridine ring/metal element, represented in the first embodiment, and the description thereof is omitted. The content of the carbon compound in the catalyst raw material mixture is also the same as in the first embodiment.

The catalyst raw material mixture in the second embodiment is preferably heated to a temperature of 250°C or more and 500°C or less and subjected to heat treatment. The heat treatment temperature is in the range, thereby allowing the cobalt element constituting the cobalt oxide to be easily coordinated to the nitrogen element, in particular, allowing divalent cobalt to be easily coordinated to the nitrogen element constituting the nitrogen-containing aromatic ring structure such as a pyridine ring structure. In addition, the cobalt oxide and the nitrogen-containing part are easily supported on the carbon compound (carbon-support part). In addition, cobalt migration can be prevented to result in a reduction in particle size of the cobalt oxide, and the catalyst is enhanced in various performances.

A temperature of 500°C or less allows the nitrogen-containing aromatic ring structure to be maintained also in a cobalt-based catalyst produced, easily resulting in increases in conversion efficiency, faraday efficiency, current density and the like, in a case where the nitrogen-containing derivative is a compound having a nitrogen-containing aromatic ring. A temperature of 500°C or less can also inhibit any unnecessary by-product from being produced, and furthermore easily results in industrial practical use.

The heat treatment temperature is more preferably 280°C or more and 470°C or less, further preferably 300°C or more, and 430°C or more, and 450°C or less, from the foregoing viewpoints. The heat treatment is preferably performed in an atmosphere of an inert gas such as an argon or nitrogen gas.

A heat treatment time equal to or more than a certain time allows the cobalt oxide and the nitrogen-containing part to be supported on the carbon compound, and allows the cobalt element of the cobalt oxide to be easily coordinated to the nitrogen element. A heat treatment time equal to or less than a certain time not only allows the nitrogen-containing aromatic ring structure included in the nitrogen-containing derivative to be easily maintained in a catalyst produced, but also enables cobalt migration to be prevented to also result in a reduction in particle size of the cobalt oxide. The heat treatment time is, for example, 0.5 hours or more and 8 hours or less, preferably 0.75 hours or more and 5 hours or less from these viewpoints.

The catalyst raw material mixture to be subjected to heat treatment is preferably in the form of a powder or particle. The mixture, which is in the form of a powder or particle, can be subjected to heat treatment to thereby obtain a catalyst in the form of a powder or particle. The catalyst raw material mixture to be subjected to heat treatment more preferably consists of the cobalt derivative, the nitrogen-containing derivative and the carbon compound.

The catalyst raw material mixture may be obtained by, for example, diluting the cobalt derivative, the nitrogen-containing derivative and the carbon compound with a diluent solvent to produce a diluent of the catalyst raw material mixture, and drying the diluent. The catalyst raw material mixture may be obtained, for example, in the form of a powder or particle.

Such each component (metal derivative, nitrogen-containing derivative and carbon compound) is preferably dispersed or dissolved in a diluent solvent in the diluent of the catalyst raw material mixture. Such each component can be dispersed or dissolved in a diluent solvent, thereby obtaining a catalyst raw material mixture where such each component is homogeneously mixed.

The method for obtaining the catalyst raw material mixture diluent is not particularly limited, and is the same as in the first embodiment except that the metal derivative is a cobalt derivative, and the detail of the diluent is also the same as in the first embodiment.

While the cobalt-based catalyst in the second embodiment may be produced by heat treatment and the heat treatment may be performed at, for example, ordinary pressure (1 atm) or a pressure (for example, 0.1 to 2 atm) around ordinary pressure, as described above, the catalyst may also be obtained by allowing the catalyst raw material mixture to react at a high pressure according to hydrothermal synthesis or the like. The heat treatment temperature in such a case may be less than 250°C.

The second embodiment of the present invention also provides a first electrode and a laminated assembly each including the cobalt-based catalyst. The electrode (first electrode) according to the second embodiment of the present invention is an electrode including the above cobalt-based catalyst and an electrode base material to which the cobalt-based catalyst is attached. The first electrode is a carbon dioxide reduction electrode for use in carbon dioxide reduction. The laminated assembly according to the second embodiment of the present invention is a laminated assembly including the first electrode, an ion exchange membrane and a second electrode in the order presented.

The respective configurations of the first electrode and the laminated assembly in the second embodiment are the same as in the first embodiment except that the catalyst for use in the first electrode is changed from the first catalyst to the cobalt-based catalyst, and the description thereof is omitted. Accordingly, the cobalt-based catalyst is physically fixed to the electrode base material, and atom constituting the electrode base material is not chemically linked to atom constituting the cobalt-based catalyst. That is, even if the electrode base material includes a carbon compound such as porous carbon, the carbon compound by itself has neither the above metal-nitrogen element bond, nor any metal -carbon element bond.

### [Third embodiment]

### <Laminated assembly>

Next, a third embodiment of the present invention is described in more detail. The third embodiment of the present invention provides a laminated assembly. The laminated assembly according to the third embodiment of the present invention is a laminated assembly including a first electrode, an ion exchange membrane and a second electrode in the order presented. The laminated assembly includes the first electrode and the second electrode joined with the ion exchange membrane being interposed, and thus a membrane-electrode assembly is constituted. The first electrode constitutes a cathode and the second electrode constitutes an anode in the laminated assembly. The laminated assembly is used in a carbon dioxide reduction apparatus, and on the first electrode a reaction of reduction of carbon dioxide (carbon dioxide reduction reaction) is performed and on the second electrode an oxidation reaction is performed.

### (Ion exchange membrane)

The ion exchange membrane for use in the third embodiment is the same as the ion exchange membrane in the first embodiment, examples thereof include a cation exchange membrane and an anion exchange membrane, and specific examples thereof are as described above.

### (First electrode)

The first electrode in the laminated assembly according to the third embodiment includes a catalyst containing a metal-nitrogen element bond, and a specific additive (hereinafter, also referred to as "catalyst additive"). The first electrode preferably includes an electrode base material, and the catalyst and the catalyst additive may be held by the electrode base material. The electrode base material in the first electrode is the same as the electrode base material for use in the first electrode in the first embodiment, and the description thereof is omitted.

The catalyst and the catalyst additive may be held by the electrode base material in the first electrode, and may be attached to the electrode base material, in the form of a mixture (catalyst composition) including the catalyst containing a metal-nitrogen element bond and the additive. The catalyst additive is used in the first electrode, thereby allowing the catalyst containing a metal-nitrogen element bond to be easily held strongly by the electrode base material. The catalyst additive may have, for example, a powder or particle shape.

The catalyst and the catalyst additive may be formed, in the form of the catalyst composition, on the electrode base material in a layered manner, thereby forming a first catalyst layer. The first catalyst layer may be formed on the surface of the electrode base material in a layered manner, may be formed in the electrode base material in a layered manner within the interior of the electrode base material being impregnated therewith, or may be formed toward the interior of the electrode base material from the surface in a layered manner. In a case where the interior of the electrode base material is impregnated with the first catalyst layer, it may be impregnated with the first catalyst layer partially or fully in the thickness direction of the electrode base material. The first catalyst layer may be appropriately porous.

The catalyst composition attached to the electrode base material may consist of the catalyst and the catalyst additive, and may also include any other component in addition to these. Examples of such any component include the above fluorine compound.

In a case where the first catalyst layer is provided on the surface and also provided toward the interior from the surface, the surface on which the first catalyst layer is provided may be disposed facing the ion exchange membrane and joined to the ion exchange membrane. That is, in a case where the electrode base material is coated with the catalyst composition, the surface coated may be joined to the ion exchange membrane. Such an aspect allows the first electrode to be easily joined strongly to the ion exchange membrane. In addition, cation or anion is thus more easily moved in the electrode. Much the same may be true on a second catalyst layer described below.

The catalyst for use in the first electrode is a catalyst containing a metal-nitrogen element bond, as described above. In the present embodiment, the first electrode is easily increased in conversion efficiency to a specific compound such as carbon monoxide due to the catalyst containing a metal-nitrogen element bond and a specific combination of the ion exchange membrane and the catalyst additive included in the first electrode, as described below, in the case of use of the laminated assembly for a carbon dioxide reduction apparatus.

The catalyst containing a metal-nitrogen element bond is not particularly limited, and the first catalyst according to the first embodiment or the cobalt-based catalyst according to the second embodiment is preferably used therefor from the viewpoint of an increase in the above conversion efficiency. It is noted that any catalyst other than the above first catalyst or cobalt-based catalyst can be used and any known catalyst containing a metal-nitrogen element bond may be used.

### [Catalyst additive]

Examples of the catalyst additive for use in the third embodiment include a cation conducting compound. Examples of the cation conducting compound include a compound having, for example, a functional group which has a Bronstead acid or a salt thereof and which is anionized by releasing a hydrogen ion or the like.

Examples of the cation conducting compound include a compound having at least one functional group of a sulfonyl group, a phosphoric group, a hydroxyl group, a silicic group and the like, and specifically include a fluororesin-based sulfonic acids, such as perfluoroethylenesulfonic acid, and sulfonated poly(ether ether ketone) (SPEEK), sulfonated poly(ether ether ketone ketone) (SPEEKK), sulfonated poly(fluorenyl ether nitrile oxynaphthalate) (PFENO), poly(styrenesulfonic acid), polyvinylsulfonic acid, poly(2-acrylamide-2-methyl-1-propanesulfonic acid) (PAMPS), silicotungstic acid-polyvinyl alcohol (SiWA-PVA) and phosphoric acid-doped polybenzimidazole (PBI).

In particular, a catalyst additive containing a sulfonyl group as a functional group is preferable, and specifically, a fluororesin-based sulfonic acids, such as perfluoroethylenesulfonic acid, are more preferable.

Examples of the perfluoroethylenesulfonic acid include a copolymer of tetrafluoroethylene and perfluoro[2-(fluorosulfonylethoxy)propylvinyl ether], and examples of a commercially available product include "Nafion" (the trademark of DuPont), as described above.

The cation conducting compounds may be used singly or in combinations of two or more thereof.

Examples of the catalyst additive also include an anion conducting compound. The anion conducting compound is a compound having a functional group which has a Bronstead base or a salt thereof, for example, a compound having a functional group which is cationized by imparting proton. The anion conducting compound is excellent in conductivity of an anion such as a hydroxide ion.

Specific examples of the anion conducting compound include a compound having any functional group such as a pyridinium group, an imidazolium group, an amino group, and an ammonium group. The amino group may be any of primary, secondary, and tertiary amino groups, and a secondary amino group and a tertiary amino group are preferable. The ammonium group is a quaternary ammonium group. In particular, a compound having an imidazolium group is preferable. Such a compound having an imidazolium group can be used to result in, for example, an increase in conversion efficiency to carbon monoxide with almost no generation of other reduced product. Examples of the compound having an imidazolium group include imidazolium chloride.

Examples of the anion conducting compound include a styrene-based polymer having an imidazolium group, polyethylene imine, a styrene-based polymer having an amino group or an ammonium group, and an acrylic polymer having an amino group or an ammonium group.

The anion conducting compound may be one obtained by adding an additive having the above functional group to a base polymer. Examples of the base polymer include, in addition to the above polymers, polystyrene, polyvinyl alcohol and polyurethane. Examples of the additive include a metal oxide, a silicon compound and a boron compound.

Similarly, the cation conducting compound may be one obtained by adding an additive having the above functional group to a base polymer, such as the above polymer and polystyrene, polyvinylalcohol or polyurethane.

Examples of the acrylic polymer having an amino group or an ammonium group, for use in the catalyst additive, include an acrylic polymer having a polyamine structure in a side chain. Examples of the styrene-based polymer having an amino group or an ammonium group include a styrene-based polymer having a polyamine structure in a side chain, a styrene-based polymer having a tertiary amino group in a side chain, and a styrene-based polymer having a quaternary ammonium group in a side chain. Such an acrylic polymer or styrene-based polymer here used can be any commercially available product such as "Diaion" series manufactured by Mitsubishi Chemical Corporation, or, for example, any one sold as a weakly basic anion-exchange resin or a strongly basic anion-exchange resin.

Examples of the styrene-based polymer having an imidazolium group, for use in the catalyst additive, include PSMIM, PSTMIM and PSDMIM described above.

The anion conducting compound here used can also be any commercially available product such as "Fumion FAA-3-SOLUT-10" of FuMA-Tech GmbH or "PowerMax NXS125 OH" of ResinTech Inc.

The anion conducting compounds may be used singly or in combinations of two or more thereof.

In the present embodiment, the type of the catalyst additive for use in the first electrode is varied depending on the type of the ion exchange membrane for use in the laminated assembly. Specifically, in a case where the ion exchange membrane is a cation exchange membrane, the catalyst additive for use in the first electrode is a cation conducting compound. Such a combination of the ion exchange membrane and the catalyst additive can allow for an enhancement in conversion efficiency to a specific compound such as carbon monoxide on the first electrode in the present embodiment. Although the principle is not clear, it is presumed that the same type of the catalyst additive, as that of the ion exchange membrane, is used to thereby allow proton to be easily moved not only in the ion exchange membrane, but also in the first electrode.

In a case where a cation exchange membrane is used, the functional group of the cation exchange membrane and the functional group of the catalyst additive (cation conducting compound) are preferably the same. Accordingly, in a case where the cation exchange membrane has a sulfonyl group, the catalyst additive in the first electrode, here used, is also preferably one having a sulfonyl group. In a case where the cation exchange membrane has a phosphoric group, the catalyst additive in the first electrode, here used, is also preferably one having a phosphoric group.

Furthermore, for the cation exchange membrane and the catalyst additive in the first electrode, the same substance is also preferably used in the laminated assembly. The cation exchange membrane in the laminated assembly is preferably one having a sulfonyl group as a functional group, among those described above, and in particular, is more preferably fluororesin-based sulfonic acids, such as perfluoroethylenesulfonic acid. Accordingly, the catalyst additive for use in the first electrode in the same laminated assembly is also preferably a catalyst additive having a sulfonyl group, and in particular, is more preferably fluororesin-based sulfonic acids, such as perfluoroethylenesulfonic acid. Such perfluoroethylenesulfonic acid is also excellent in function as a binder, and thus is used in the catalyst additive to thereby allow the first catalyst to be easily attached to the electrode base material through the catalyst additive.

In a case where the ion exchange membrane is an anion exchange membrane, the catalyst additive for use in the first electrode is an anion conducting compound. In the present embodiment, such a combination of the anion exchange membrane and the anion conducting compound can also allow for an enhancement in conversion efficiency to a specific compound such as carbon monoxide in the first electrode, as in the case of the cation exchange membrane. Although the principle is not clear, it is presumed that the same type of the catalyst additive, as that of the ion exchange membrane, is used to thereby allow an anion such as a hydroxide ion to be easily moved not only in the ion exchange membrane, but also in the first electrode.

In a case where an anion exchange membrane is used as the ion exchange membrane, the functional group of the anion exchange membrane and the functional group of the catalyst additive for use in the first electrode are preferably the same. Accordingly, in a case where the anion exchange membrane has an ammonium group, the catalyst additive here used is also preferably one having an ammonium group. In a case where the anion exchange membrane has an imidazolium group, the catalyst additive here used is also preferably one having an imidazolium group. Furthermore, for the anion exchange membrane and the catalyst additive in the first electrode the same substance is also preferably used in the laminated assembly.

The anion exchange membrane is preferably one having an imidazolium group as a functional group, among those described above, and in particular, a styrene-based polymer having an imidazolium group is more preferable. Accordingly, the catalyst additive for use in the first electrode is also preferably a compound having an imidazolium group, and in particular, is more preferably a styrene-based polymer having an imidazolium group.

As described above, the catalyst composition including the catalyst and the catalyst additive is held by the electrode base material in the first electrode. The content of the catalyst additive in the catalyst composition is preferably 10 mass% or more and 50 mass% or less. In a case where the content of the catalyst additive is in the range, not only the number of catalytically active sites is increased, but also an anion or cation is easily moved in the first electrode, thereby easily resulting in an increase in conversion efficiency in the first electrode. The content of the catalyst additive is more preferably 15 mass% or more and 45 mass% or less, further preferably 20 mass% or more and 40 mass% or less, still further preferably 25 mass% or more and 35 mass% or less, from these viewpoints.

### (Second electrode)

The second electrode is an electrode including an oxidation reaction catalyst (second catalyst), as in the first embodiment, and the detail thereof is the same as in the first embodiment and thus the description thereof is omitted. It is noted that the second electrode may further include a catalyst additive, however. Hereinafter, a case where the second electrode includes a catalyst additive will be described mainly about the difference from the second electrode in the first embodiment, and the description of that having the same configuration is omitted.

Also in the third embodiment, the second electrode preferably includes an electrode base material, in which the second catalyst and the catalyst additive may be held by the electrode base material, and a catalyst composition (mixture) including the second catalyst and the catalyst additive may be attached to the electrode base material, as described below. The electrode base material in the second electrode is the same as the electrode base material for use in the second electrode in the first embodiment, and the description thereof is omitted. The catalyst additive is used in the second electrode to thereby allow the second catalyst to be easily held strongly by the electrode base material.

The catalyst and the catalyst additive may be mixed, and formed, in the form of a catalyst composition, on the electrode base material in a layered manner, thereby forming a second catalyst layer, in the second electrode. The second catalyst layer may be formed on the surface of the electrode base material in a layered manner, may be formed in the electrode base material in a layered manner within the interior of the electrode base material being impregnated therewith, or may be formed toward the interior of the electrode base material from the surface in a layered manner. In a case where the interior of the electrode base material is impregnated with the second catalyst layer, it may be impregnated with the second catalyst layer partially or fully in the thickness direction of the electrode base material. The second catalyst layer may be appropriately porous.

The second catalyst for use in the second electrode is as described in the first embodiment, and the detail of the catalyst additive for use in the second electrode is as described above.

In the present embodiment, the type of the catalyst additive for use in the second electrode is varied depending on the type of the ion exchange membrane for use in the laminated assembly, as in the first electrode. Specifically, in a case where the ion exchange membrane is a cation exchange membrane, the catalyst additive for use in the second electrode is a cation conducting compound. Thus, not only use of a cation conducting compound in the first and the second electrodes, but also use of a cation exchange membrane as the ion exchange membrane can allow for a further enhancement in conversion efficiency in the first electrode. Although the principle is not clear, it is presumed that the same type of the catalyst additive, as those of the ion exchange membrane and the first electrode, is used also in the second electrode to thereby allow proton to be more easily moved through the ion exchange membrane.

In a case where a cation exchange membrane is used, the functional group of the cation exchange membrane and the functional group of the cation conducting compound for use in the second electrode are preferably the same, and for the cation exchange membrane and the cation conducting compound in the second electrode the same substance is also preferably used.

As described above, the cation exchange membrane preferably has a sulfonyl group as a functional group, and in particular, a fluororesin-based sulfonic acids, such as perfluoroethylenesulfonic acid, are more preferable. Thus, the catalyst additive for use in the second electrode in the same laminated assembly is also preferably a catalyst additive having a sulfonyl group, and in particular, is more preferably a fluororesin-based sulfonic acids, such as perfluoroethylenesulfonic acid. The catalyst additives for use in the first and the second electrodes in the same laminated assembly are further preferably each a catalyst additive having a sulfonyl group, and in particular, are still further preferably each a fluororesin-based sulfonic acids, such as perfluoroethylenesulfonic acid.

In a case where the ion exchange membrane is an anion exchange membrane, the catalyst additive for use in the second electrode is an anion conducting compound. Thus, not only use of an anion conducting compound in the second electrode, but also use of an anion exchange membrane as the ion exchange membrane can allow for an enhancement in conversion efficiency in the first electrode. Although the principle is not clear, it is presumed that the same type of the catalyst additive, as those of the ion exchange membrane and the first electrode, is used also in the second electrode to thereby allow an anion such as a hydroxide ion to be more easily moved through the ion exchange membrane.

In a case where an anion exchange membrane is used, the functional group of the anion exchange membrane and the functional group of the catalyst additive for use in the second electrode are preferably the same. The anion exchange membrane is preferably one having an imidazolium group as a functional group, and in particular, a styrene-based polymer having an imidazolium group is more preferable. Accordingly, the catalyst additive for use in the second electrode is also preferably a compound having an imidazolium group, and in particular, is more preferably a styrene-based polymer having an imidazolium group. The catalyst additives (anion conducting compounds) for use in the first and the second electrodes in the same laminated assembly further preferably each have an imidazolium group, and in particular, are still further preferably each a styrene-based polymer having an imidazolium group.

As described above, the catalyst composition including the catalyst and the catalyst additive is held by the electrode base material in the second electrode. The content of the catalyst additive in the catalyst composition is 10 mass% or more and 50 mass% or less, more preferably 15 mass% or more and 45 mass% or less, further preferably 20 mass% or more and 40 mass% or less, still further preferably 25 mass% or more and 35 mass% or less, from the viewpoint of an increase in conversion efficiency to a specific compound such as carbon monoxide in the first electrode.

### (Method for producing laminated assembly)

The first electrode in the third embodiment of the present invention can be produced by producing the catalyst (for example, first catalyst or cobalt-based catalyst) in advance, and attaching a mixture (catalyst composition) of the catalyst produced and the catalyst additive to the electrode base material, as described above. The method for attaching the catalyst composition to the electrode base material may involve diluting the first catalyst or the cobalt-based catalyst and any component (catalyst additive or the like) other than the catalyst with a diluent and attaching the resultant, as in the first or second embodiment, and the detail thereof is as described in the first embodiment. In a case where the second electrode includes the catalyst additive, the second electrode may be produced according to the same method as in the first electrode. The method for producing the laminated assembly is also as described in the first embodiment.

### [Carbon dioxide reduction apparatus]

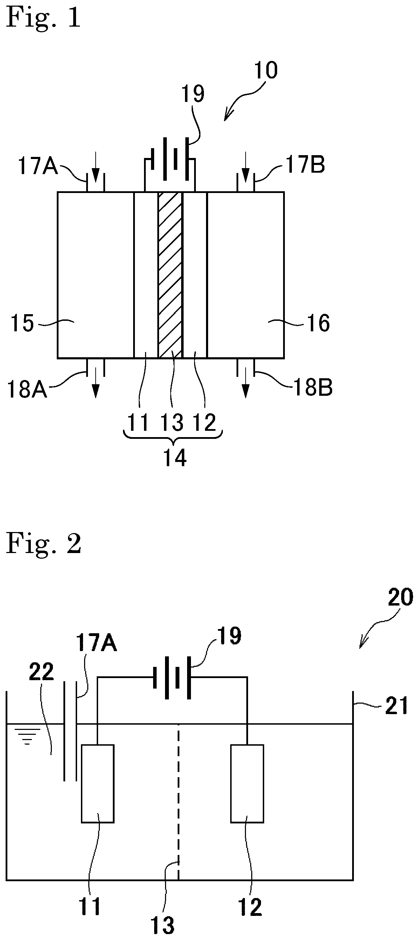

The carbon dioxide reduction apparatus of the present invention includes any of the first catalyst, first electrode and laminated assembly according to the first embodiment, the cobalt-based catalyst, first electrode and laminated assembly according to the second embodiment, and the laminated assembly according to the third embodiment. Hereinafter, the detail of the carbon dioxide reduction apparatus will be described with a carbon dioxide reduction apparatus 10 including the laminated assembly according to the first, second or third embodiment, with reference to Fig. 1.

The carbon dioxide reduction apparatus 10 includes a laminated assembly 14 including a first electrode (cathode) 11, an ion exchange membrane 13 and a second electrode (anode) 12, as described above. The carbon dioxide reduction apparatus 10 reduces carbon dioxide to generate a reduced product, on the first electrode 11. Examples of the reduced product include CO (carbon monoxide), HCO³⁻, OH⁻, HCO⁻, H₂CO, (HCO₂)⁻, H₂CO₂, CH₃OH, CH₄, C₂H₄, CH₃CH₂OH, CH₃COO⁻, CH₃COOH, C₂H₆, O₂, (COOH)₂ and (COO⁻)₂, and carbon monoxide is preferable. On the second electrode 12, an oxidation-reduction reaction of any substance may be performed, for example, an oxidation reaction of water is performed.

An anion is generated in the first electrode 11. The anion generated in the first electrode is fed toward the second electrode 12 through the ion exchange membrane 13. The anion is preferably a hydroxide ion. In a case where the anion is generated in the first electrode 11, the ion exchange membrane 13 may be an anion exchange membrane.

A cation is generated in the second electrode 12. The cation generated is fed toward the first electrode 11 through the ion exchange membrane 13. The cation is preferably proton. In a case where the anion is generated in the first electrode 11, the ion exchange membrane 13 may be a cation exchange membrane.

Any one of such cation and anion may be generated in the carbon dioxide reduction apparatus 10.

The reduction reaction occurring in the first electrode 11 is specifically as represented in the following formula (i-1) or formula (i-2), in a case where the reduced product is carbon monoxide. Whether the formula (i-1) or the formula (i-2) is dominant in the first electrode 11 is determined by, for example, the pH or the presence of water in the first electrode 11.

CO₂ + 2H⁺ + 2e⁻ → CO + H₂O (i-1)

CO₂ + H₂O + 2e⁻ → CO + 2OH⁻ (i-2)

The carbon dioxide reduction apparatus 10 is partitioned by a laminated assembly 14 and thus a cathode compartment 15 and an anode compartment 16 are formed. Thus, the carbon dioxide reduction apparatus 10 includes a two-compartment diaphragm cell separated to two compartments by the laminated assembly (membrane-electrode assembly) 14.

The cathode compartment 15 is provided with, for example, a first introduction port 17A for introduction of carbon dioxide and a first discharge port 18A for discharge of a substance obtained by reduction, such as carbon monoxide. The anode compartment 16 is also provided with, for example, a second introduction port 17B for introduction of a substance for oxidation, such as water, and an inert gas described below, and a second discharge port 18B for discharge of a substance oxidized, such as oxygen.

A power source 19 is connected to the first and second electrodes 11 and 12, and any voltage is applied between the first and second electrodes 11 and 12. Carbon dioxide is introduced through the first introduction port 17A into the cathode compartment 15, and such carbon dioxide is reduced in the first electrode 11, thereby generating a reduced product. The reduced product is as described above. No water may be packed in the cathode compartment 15 and gaseous carbon dioxide may be brought into contact with the first electrode 11. Alternatively, not only water may be packed in the cathode compartment 15, but also carbon dioxide may be introduced into such water and brought into contact with the first electrode 11 in such water. Alternatively, gaseous carbon dioxide with moisture may be brought into contact with the first electrode 11. Herein, gaseous carbon dioxide is preferably introduced and brought into contact with the first electrode 11 in the cathode compartment 15.

Hydrogen, water, or an aqueous solution including, for example, a hydroxide ion or hydrogen is packed in or introduced into the anode compartment 16, and an oxidation reaction is performed in the second electrode 12. An inert gas such as helium may be appropriately blown into such water or aqueous solution packed in the anode compartment 16.

The above carbon dioxide reduction apparatus 10, in which the laminated assembly according to the first, second or third embodiment is used as the laminated assembly 14, can thus result in an increase in conversion efficiency of carbon dioxide to a specific reduced product such as carbon monoxide.

Fig. 2 illustrates a carbon dioxide reduction apparatus 20 according to another aspect. The catalyst, first electrode and the like according to the first embodiment or the second embodiment may be applied to the carbon dioxide reduction apparatus 20 described below.

The carbon dioxide reduction apparatus 20 is used with an electrolyte solution, and an electrochemical cell 21 is filled with an electrolyte solution 22 and first and second electrodes 11 and 12 are disposed in the electrolyte solution 22. The first and second electrodes 11 and 12 may be in contact with the electrolyte solution 22, and are not necessarily required to be disposed in the electrolyte solution 22. The first electrode 11, the second electrode 12 and the ion exchange membrane 13 does not form the laminated assembly 14, but are mutually separated and disposed, in the carbon dioxide reduction apparatus 20.

The ion exchange membrane 13 is disposed in the electrochemical cell 21, and the electrolyte solution 22 is partitioned in a region where the first electrode 11 is present and a region where the second electrode 12 is present, by the ion exchange membrane 13. The carbon dioxide reduction apparatus 20 is provided with a first introduction port 17A, and one end of the introduction port 17A is disposed in the electrolyte solution 22 in the region where the first electrode 11 is present. The carbon dioxide reduction apparatus 20 may also be provided with a reference electrode disposed in the electrolyte solution 22 in the region where the first electrode 11 is present. Any voltage is applied between the first and the second electrodes 11 and 12, by a power source 19.

Even such a carbon dioxide reduction apparatus 20 with an electrolyte allows carbon dioxide introduced through the first introduction port 17A to be reduced on the first electrode 11, thereby generating carbon monoxide. Water, a hydroxide ion, hydrogen or other substance in the electrolyte solution 22 may be oxidized on the second electrode 12. A gas such as hydrogen may be blown into the electrolyte solution 22 in the region where the second electrode 12 is present, through a second introduction port not illustrated.

The carbon dioxide reduction apparatus 20 can increase conversion efficiency of carbon dioxide to a specific reduced product such as carbon monoxide by use of, for example, the first electrode according to the first embodiment or the second embodiment as the first electrode 11. There may also be increased in faraday efficiency or current density, in generation of a specific compound such as carbon monoxide.

The carbon dioxide reduction apparatuses 10 and 20 described above are each one example of the carbon dioxide reduction apparatus, and the carbon dioxide reduction apparatus of the present invention is not limited by the configuration. For example, the ion exchange membrane may be omitted in such a carbon dioxide reduction apparatus 20 with an electrolyte. For example, any voltage may be applied by a photovoltaic power.

### [Examples]

The present invention is still further specifically described with reference to Examples, but the present invention is not intended to be limited by such Examples at all.

### (Example 1)

### [Production of first electrode]

38.0 mg of poly(4-vinylpyridine) (P4VP, weight-average molecular weight: 60,000) was dispersed in 50 ml of ethanol, thereby obtaining a P4VP dispersion liquid. The P4VP dispersion liquid was mixed with 1.8 ml (6.5 mg, Co = 2 mg) of a 20 mM Co(II) (NO₃)₂/ethanol solution and 54 mg of Ketjen black ("ECP600JD", manufactured by Lion Specialty Chemicals Co., Ltd.), and the mixture was dried, thereby obtaining a powder (catalyst raw material mixture). The content of cobalt in the catalyst raw material mixture was 2 mass%.

The resulting powder was sintered under an argon atmosphere at 200°C for 3 hours, thereby obtaining a powder (first catalyst).

8 mg of the first catalyst and 40 µL of a dispersion liquid of 10 mass% of a catalyst additive were mixed and dispersed in 400 µL of acetone, carbon paper ("29BC" manufactured by SGL) heated to 40°C was coated therewith, and the resultant was dried, thereby obtaining a first electrode. The catalyst additive here used was "Nafion". The content of the catalyst additive based on the total amount of the first catalyst and the catalyst additive (namely, catalyst composition) was 33 mass%.

### [Production of second electrode]

Subsequently, 16 ml of an aqueous 17 mM IrCl₃ solution and 54 mg of Ketjen black were dispersed in 50 ml of water, and then dried, thereby obtaining a powder. The resulting powder was sintered under a hydrogen atmosphere at 300°C for 2 hours, thereby obtaining a second catalyst powder. 8 mg of the second catalyst and 40 µL of a dispersion liquid of 10 mass% of a catalyst additive were dispersed in 400 µL of acetone, and carbon paper "29BC" manufactured by SGL, heated to 40°C, was coated therewith, and the resultant was dried, thereby obtaining a second electrode. The catalyst additive here used was "Nafion". The content of the catalyst additive based on the total amount of the second catalyst and the catalyst additive (namely, catalyst composition) was 33 mass%.

### [Production of carbon dioxide reduction apparatus]

The first electrode produced above, an ion exchange membrane and the second electrode were laminated in the order presented, and hot-pressed at 59 MPa and 413 K, thereby producing a membrane-electrode assembly. The electrodes were here disposed so that a surface of each of the electrodes, on which a catalyst layer was formed by coating with the catalyst composition, was joined to the ion exchange membrane. The ion exchange membrane here used was "Nafion". The membrane-electrode assembly was installed at the center of a two-compartment diaphragm cell having spaces of a cathode compartment and an anode compartment, thereby obtaining a carbon dioxide reduction apparatus.

### (Examples 2 to 6)

The same manner as in Example 1 was performed except that the sintering temperature in obtaining of the first catalyst was changed from 200°C to each temperature described in Table 1.

### (Examples 7 to 12)

The same manners as in Examples 1 to 6 were performed, respectively, except that 38.0 mg of poly(2,5-pyridine) (P25P, weight-average molecular weight: 2500) was used instead of P4VP and the amount of the 20 mM Co(II) (NO₃)₂/ethanol solution added was changed to 1.8 ml.

### (Examples 13 to 18)

The same manners as in Examples 1 to 6 were performed, respectively, except that 24 mg of 2,2'-bipyridine (BPy) was used instead of P4VP and the amount of the 20 mM Co(II) (NO₃)₂/ethanol solution added was changed to 1.5 ml.

### (Examples 19 to 24)

The same manners as in Examples 1 to 6 were performed, respectively, except that 27 mg of 4-aminopyridine (APy) was used instead of P4VP and the amount of the 20 mM Co(II) (NO₃)₂/ethanol solution added was changed to 1.4 ml.

### (Examples 25 to 28)

The same manners as in Examples 2 to 5 were performed, respectively, except that 1.7 ml of a 20 mM Ni(II) (NO₃)₂/ethanol solution was used instead of the 20 mM Co(II) (NO₃)₂/ethanol solution.

### (Example 29 to 32)

The same manners as in Examples 2 to 5 were performed, respectively, except that 1.8 ml of a 20 mM Fe(II) (NO₃)₂/ethanol solution was used instead of the 20 mM Co(II) (NO₃)₂/ethanol solution.

### (Example 33)

The same manner as in Example 3 was performed except that the amount of P4VP added was changed to 18.0 mg and the amount of Ketjen black added was changed to 76 mg.

### (Example 34)

The same manner as in Example 3 was performed except that the amount of P4VP added was changed to 54.0 mg and the amount of Ketjen black added was changed to 45.0 mg.

### (Example 35)

The same manner as in Example 3 was performed except that the amount of P4VP added was changed to 75.0 mg and the amount of Ketjen black added was changed to 30 mg.

### (Example 36)

The same manner as in Example 3 was performed except that the amount of Ketjen black added was changed to 160 mg.

### (Example 37)

The same manner as in Example 3 was performed except that the amount of Ketjen black added was changed to 26 mg.

### (Example 38)

The same manner as in Example 3 was performed except that the amount of Ketjen black added was changed to 17 mg.

### (Example 39)

The same manner as in Example 3 was performed except that the amount of Ketjen black added was changed to 10 mg.

### (Examples 40 to 43)

The same manner as in Example 3 was performed except that the amount of the catalyst additive dispersion liquid added was changed so that the content of the catalyst additive based on the total amount of the first catalyst and the catalyst additive was as described in Table 1.

### (Example 44)

After a first catalyst was produced in the same manner as in Example 3, 8 mg of the first catalyst and 80 µL of a dispersion liquid of 5 mass% of a catalyst additive were mixed and dispersed in 400 µL of acetone, carbon paper ("29BC" manufactured by SGL) heated to 40°C was coated therewith, and the resultant was dried, thereby obtaining a first electrode. Such a catalyst additive dispersion liquid here used was "Fumion FAA-3-SOLUT-10" of FuMA-Tech GmbH. The content of the catalyst additive based on the total amount of the first catalyst and the catalyst additive (namely, catalyst composition) was 33 mass%.

The first electrode produced above, an ion exchange membrane and the second electrode produced in the same manner as in Example 1 were laminated in the order presented, and hot-pressed at 59 MPa and 413 K, thereby producing a membrane-electrode assembly. The ion exchange membrane here used was "FAA-3-50" of FuMA-Tech GmbH. The membrane-electrode assembly was installed at the center of a two-compartment diaphragm cell having spaces of a cathode compartment and an anode compartment, thereby obtaining a carbon dioxide reduction apparatus.

### (Example 45)

The same manner as in Example 44 was performed except that the amount of Ketjen black added was changed to 26.0 mg.

### (Example 46 to 48)

The same manner as in Example 45 was performed except that the amount of the catalyst additive dispersion liquid added was changed so that the content of the catalyst additive based on the total amount of the first catalyst and the catalyst additive was as described in Table 1.

### (Example 49)

After a first catalyst was produced in the same manner as in Example 3, 8 mg of the first catalyst was dispersed in 400 µL of acetone, carbon paper ("29BC" manufactured by SGL) heated to 40°C was coated therewith and the resultant was dried, thereby obtaining a first electrode. Other operations were performed in the same manner as in Example 3.

### (Comparative Example 1)

1.8 ml of a 20 mM Co(II) (NO₃)₂/ethanol solution and 94.5 mg of Ketjen black were dispersed in 50 ml of ethanol, and dried, thereby obtaining a powder (catalyst raw material mixture). Thereafter, a catalyst, and then a first electrode and a second electrode were produced from the catalyst raw material mixture in the same manner as in Example 3, and thereafter a carbon dioxide reduction apparatus was also produced in the same manner.

### (Comparative Example 2)

40.5 mg of P4VP was dispersed in 50 ml of ethanol, thereby obtaining a P4VP dispersion liquid. The P4VP dispersion liquid was mixed with 54 mg of Ketjen black, and the mixture was dried, thereby obtaining a powder (catalyst raw material mixture). Thereafter, a catalyst, and then a first electrode and a second electrode were produced from the catalyst raw material mixture in the same manner as in Example 3, and thereafter a carbon dioxide reduction apparatus was also produced in the same manner.

### [Evaluation method 1]

CO₂ (1 atm) was allowed to flow through the cathode compartment of each of the carbon dioxide reduction apparatuses of Examples 1 to 49 and Comparative Examples 1 and 2, and the anode compartment thereof was filled with ion exchanged water and helium (1 atm) was allowed to flow therethrough. A voltage of -0.3 to -1.0 V (SHE) from the cathode potential at 273 K was applied. Any gas discharged through a discharge port was analyzed by gas chromatography (GC), and the current value was measured by potentiostat. The conversion efficiency was determined from the ratio (ideal energy/input energy) of the ideal minimum energy (energy efficiency: 100%) necessary for a CO₂ reduction reaction, to the power energy actually input, as estimated from the standard oxidation-reduction potential of the reaction, and was evaluated according to the following evaluation criteria. The conversion efficiency was measured at both current densities of 30 mA/cm² and 100 mA/cm².
AA: the conversion efficiency was 45% or more.
A: the conversion efficiency was 30% or more and less than 45%.
B: the conversion efficiency was 10% or more and less than 30%.
C: the conversion efficiency was less than 10%.

**[Table 1]**

| | Catalyst | Sintering temperature (°C) | Molar ratio, Pyridine ring/metal element | Content of metal (wt%) | Content of additive in catalyst layer (wt%) | Ion exchange membrane | CO₂-CO conversion efficiency (%) @30mA/cm² | | CO₂-CO conversion efficiency (%) @100mA/cm² | |
|---|---|---|---|---|---|---|---|---|---|---|
| Example 1 | Co(NO3)2+P4VP+Ketjen black | 200 | 10 | 2 | 33 | Cation exchange membrane | B | 10 | C | 2 |
| Example 2 | Co(NO3)2+P4VP+Ketjen black | 300 | 10 | 2 | 33 | Cation exchange membrane | AA | 55 | A | 41 |
| Example 3 | Co(NO3)2+P4VP+Ketjen black | 350 | 10 | 2 | 33 | Cation exchange membrane | AA | 60 | AA | 45 |
| Example 4 | Co(NO3)2+P4VP+Ketjen black | 400 | 10 | 2 | 33 | Cation exchange membrane | AA | 54 | A | 42 |
| Example 5 | Co(NO3)2+P4VP+Ketjen black | 450 | 10 | 2 | 33 | Cation exchange membrane | AA | 55 | A | 38 |
| Example 6 | Co(NO3)2+P4VP+Ketjen black | 550 | 10 | 2 | 33 | Cation exchange membrane | B | 25 | B | 10 |
| Example 7 | Co(NO3)2+P25P+Ketjen black | 200 | 10 | 2 | 33 | Cation exchange membrane | B | 20 | C | 2 |
| Example 8 | Co(N03)2+P25P+Ketjen black | 300 | 10 | 2 | 33 | Cation exchange membrane | AA | 46 | B | 15 |
| Example 9 | Co(N03)2+P25P+Ketjen black | 350 | 10 | 2 | 33 | Cation exchange membrane | AA | 52 | B | 20 |
| Example 10 | Co(N03)2+P25P+Ketjen black | 400 | 10 | 2 | 33 | Cation exchange membrane | AA | 50 | A | 35 |
| Example 11 | Co(N03)2+P25P+Ketjen black | 450 | 10 | 2 | 33 | Cation exchange membrane | AA | 45 | A | 30 |
| Example 12 | Co(N03)2+P25P+Ketjen black | 550 | 10 | 2 | 33 | Cation exchange membrane | B | 20 | B | 28 |
| Example 13 | Co(NO3)2+BPy+Ketjen black | 200 | 10 | 2 | 33 | Cation exchange membrane | B | 20 | C | 5 |
| Example 14 | Co(NO3)2+BPy+Ketjen black | 300 | 10 | 2 | 33 | Cation exchange membrane | B | 11 | C | 1 |
| Example 15 | Co(NO3)2+BPy+Ketjen black | 350 | 10 | 2 | 33 | Cation exchange membrane | A | 43 | B | 23 |
| Example 16 | Co(NO3)2+BPy+Ketjen black | 400 | 10 | 2 | 33 | Cation exchange membrane | A | 42 | B | 21 |
| Example 17 | Co(NO3)2+BPy+Ketjen black | 450 | 10 | 2 | 33 | Cation exchange membrane | A | 32 | B | 10 |
| Example 18 | Co(NO3)2+BPy+Ketjen black | 550 | 10 | 2 | 33 | Cation exchange membrane | B | 20 | C | 5 |
| Example 19 | Co(NO3)2+Apy+Ketjen black | 200 | 10 | 2 | 33 | Cation exchange membrane | B | 10 | C | 1 |
| Example 20 | Co(NO3)2+Apy+Ketjen black | 300 | 10 | 2 | 33 | Cation exchange membrane | B | 12 | C | 2 |
| Example 21 | Co(NO3)2+Apy+Ketjen black | 350 | 10 | 2 | 33 | Cation exchange membrane | A | 42 | C | 7 |
| Example 22 | Co(NO3)2+Apy+Ketjen black | 400 | 10 | 2 | 33 | Cation exchange membrane | A | 38 | C | 6 |
| Example 23 | Co(NO3)2+Apy+Ketjen black | 450 | 10 | 2 | 33 | Cation exchange membrane | A | 34 | C | 5 |
| Example 24 | Co(NO3)2+Apy+Ketjen black | 550 | 10 | 2 | 33 | Cation exchange membrane | B | 10 | C | 4 |
| Example 25 | Ni(NO3)2+P4VP+Ketjen black | 300 | 10 | 2 | 33 | Cation exchange membrane | AA | 49 | B | 25 |
| Example 26 | Ni(NO3)2+P4VP+Ketjen black | 350 | 10 | 2 | 33 | Cation exchange membrane | A | 43 | A | 40 |
| Example 27 | Ni(NO3)2+P4VP+Ketjen black | 400 | 10 | 2 | 33 | Cation exchange membrane | A | 42 | A | 34 |
| Example 28 | Ni(NO3)2+P4VP+Ketjen black | 450 | 10 | 2 | 33 | Cation exchange membrane | A | 41 | A | 32 |
| Example 29 | Fe(NO3)2+P4VP+Ketjen black | 300 | 10 | 2 | 33 | Cation exchange membrane | B | 22 | B | 12 |
| Example 30 | Fe(NO3)2+P4VP+Ketjen black | 350 | 10 | 2 | 33 | Cation exchange membrane | A | 39 | B | 13 |
| Example 31 | Fe(NO3)2+P4VP+Ketjen black | 400 | 10 | 2 | 33 | Cation exchange membrane | A | 35 | B | 12 |
| Example 32 | Fe(NO3)2+P4VP+Ketjen black | 450 | 10 | 2 | 33 | Cation exchange membrane | B | 29 | B | 10 |
| Example 33 | Co(NO3)2+P4VP+Ketjen black | 350 | 5 | 2 | 33 | Cation exchange membrane | AA | 50 | A | 35 |
| Example 34 | Co(NO3)2+P4VP+Ketjen black | 350 | 15 | 2 | 33 | Cation exchange membrane | AA | 45 | A | 35 |
| Example 35 | Co(NO3)2+P4VP+Ketjen black | 350 | 20 | 2 | 33 | Cation exchange membrane | A | 33 | A | 35 |
| Example 36 | Co(NO3)2+P4VP+Ketjen black | 350 | 10 | 1 | 33 | Cation exchange membrane | AA | 58 | A | 35 |
| Example 37 | Co(NO3)2+P4VP+Ketjen black | 350 | 10 | 3 | 33 | Cation exchange membrane | AA | 62 | AA | 51 |
| Example 38 | Co(NO3)2+P4VP+Ketjen black | 350 | 10 | 3.5 | 33 | Cation exchange membrane | AA | 61 | AA | 50 |
| Example 39 | Co(NO3)2+P4VP+Ketjen black | 350 | 10 | 4 | 33 | Cation exchange membrane | B | 20 | B | 10 |
| Example 40 | Co(NO3)2+P4VP+Ketjen black | 350 | 10 | 3 | 20 | Cation exchange membrane | AA | 49 | B | 20 |
| Example 41 | Co(NO3)2+P4VP+Ketjen black | 350 | 10 | 3 | 27 | Cation exchange membrane | AA | 60 | AA | 48 |
| Example 42 | Co(NO3)2+P4VP+Ketjen black | 350 | 10 | 3 | 38 | Cation exchange membrane | AA | 54 | A | 38 |
| Example 43 | Co(NO3)2+P4VP+Ketjen black | 350 | 10 | 3 | 42 | Cation exchange membrane | AA | 52 | A | 35 |
| Example 44 | Co(NO3)2+P4VP+Ketjen black | 350 | 10 | 2 | 33 | Anion exchange membrane | AA | 51 | A | 34 |
| Example 45 | Co(NO3)2+P4VP+Ketjen black | 350 | 10 | 3 | 33 | Anion exchange membrane | AA | 55 | A | 38 |
| Example 46 | Co(NO3)2+P4VP+Ketjen black | 350 | 10 | 3 | 20 | Anion exchange membrane | A | 41 | B | 10 |
| Example 47 | Co(NO3)2+P4VP+Ketjen black | 350 | 10 | 3 | 28 | Anion exchange membrane | A | 41 | A | 32 |
| Example 48 | Co(NO3)2+P4VP+Ketjen black | 350 | 10 | 3 | 42 | Anion exchange membrane | AA | 52 | B | 28 |
| Example 49 | Co(NO3)2+P4VP+Ketjen black | 350 | 10 | 2 | 0 | Cation exchange membrane | B | 25 | C | 8 |
| Comparative Example 1 | Co(NO3)2+Ketjen black | 350 | - | 3 | 33 | Cation exchange membrane | C | 0 | c | 0 |
| Comparative Example 2 | P4VP+Ketjen black | 350 | - | 0 | 33 | Cation exchange membrane | C | 0 | c | 0 |

| | | | | | | | | | | |
|---|---|---|---|---|---|---|---|---|---|---|
| * In Table 1, Pyridine ring/metal element and Content of metal represent the molar ratio and the content in the catalyst raw material mixture, respectively. | | | | | | | | | | |

As shown in Table 1, the carbon dioxide reduction apparatus of each Example, in which the catalyst obtained by sintering the catalyst raw material mixture including the metal derivative, the pyridine derivative and the carbon compound was used, thus converted carbon dioxide to carbon monoxide and exhibited a favorable conversion efficiency at a current density of at least any of 30 mA/cm² and 100 mA/cm². The catalyst of each Example could be produced by sintering at a relatively low temperature, and could be understood to be industrially excellent.

On the other hand, the carbon dioxide reduction apparatus of each of Comparative Examples 1 and 2, in which any of the metal derivative, the pyridine derivative and the carbon compound was not compounded in the catalyst raw material mixture, did not thus convert any carbon dioxide to carbon monoxide.

### (Example 50)

38.0 mg of poly(4-vinylpyridine) (P4VP, weight-average molecular weight 60,000) was dispersed in 50 ml of ethanol, thereby obtaining a P4VP dispersion liquid. The P4VP dispersion liquid was mixed with 1.8 ml(6.5 mg, CO=2 mg) of a 20 mM Co(II) (NO₃)₂/ethanol solution and 27 mg of Ketjen black ("ECP600JD", manufactured by Lion Specialty Chemicals Co., Ltd.), and the mixture was dried, thereby obtaining a powder (catalyst raw material mixture). The content of cobalt in the catalyst raw material mixture was 3 mass%.

The resulting powder was sintered under an argon atmosphere at 350°C for 1.5 hours, thereby obtaining a powder (catalyst).

8 mg of the catalyst and 40 µL of a dispersion liquid of 10 mass% of a catalyst additive were mixed and dispersed in 400 µL of acetone, carbon paper ("29BC" manufactured by SGL) heated to 40°C was coated therewith, and the resultant was dried, thereby obtaining a first electrode. The catalyst additive here used was "Nafion". The content of the catalyst additive based on the total amount of the catalyst and the catalyst additive was 33 mass%.

Thereafter, a second electrode and a carbon dioxide reduction apparatus were produced in the same manner as in Example 1.

### (Example 51)

The same manner as in Example 50 was performed except that poly(2-vinylpyridine) (weight-average molecular weight: 35,000) was used instead of poly(4-vinylpyridine).

### (Example 52)

The same manner as in Example 50 was performed except that 4-aminopyridine was used instead of poly(4-vinylpyridine).

### (Example 53)

The same manner as in Example 50 was performed except that poly(2,5-pyridine) (weight-average molecular weight: 2,500) was used instead of poly(4-vinylpyridine).

### (Example 54)

The same manner as in Example 50 was performed except that 4,4'-diamino-2,2'-bipyridine was used instead of poly(4-vinylpyridine).

### (Example 55)

The same manner as in Example 50 was performed except that poly(4-vinylimidazole) (weight-average molecular weight: 84,000) was used instead of poly(4-vinylpyridine).

### (Example 56)

The same manner as in Example 50 was performed except that poly(1-vinyl-1,2,4-triazole) (weight-average molecular weight: 84,000) was used instead of poly(4-vinylpyridine).

### (Example 57)

The same manner as in Example 50 was performed except that the amount of Ketjen black added was changed to 54 mg.

### (Example 58)

The same manner as in Example 50 was performed except that the amount of Ketjen black added was changed to 18 mg.

### (Comparative Example 3)

1.6 mg of a silver nanoparticle (manufactured by Sigma-Aldrich) and 5.4 mg of Ketjen black ("ECP600JD", manufactured by Lion Specialty Chemicals Co., Ltd.) were dispersed in 1 ml of isopropanol, and carbon paper ("29BC" manufactured by SGL) was spray-coated therewith. The resultant was heated and dried at 120°C for 0.5 hours, thereby obtaining a first electrode.

### (Comparative Example 4)

The same manner as in Comparative Example 3 was performed except that a gold nanoparticle (manufactured by Sigma-Aldrich) was used instead of the silver nanoparticle.

### (Comparative Example 5)

4 mg of cobalt porphyrin (manufactured by Sigma-Aldrich) and 10 mg of Ketjen black ("ECP600JD", manufactured by Lion Specialty Chemicals Co., Ltd.) were dispersed in 80 ml of dimethylformamide, and dried, thereby obtaining a catalyst. 8 mg of the catalyst was dispersed in 1 ml of isopropanol, and carbon paper ("29BC" manufactured by SGL) was spray-coated therewith. The resultant was heated and dried at 120°C for 0.5 hours, thereby obtaining a first electrode.

### [Structural analysis]

The structure of the catalyst obtained in Example 50 was evaluated according to X-ray photoemission spectroscopy (XPS) and X-ray diffraction measurement (XRD). Evaluation conditions were as follows.

### (XPS)

The catalyst powder as a sample for XPS was attached onto a PE film, and subjected to XPS with Physical Electronics Quantum 2000 Scanning ESCA Microprobe.

### (XRD)

XRD was performed with a Panalytical Empyrean X-ray diffractometer having a Cu anode. The sweeping rate was 1°/min.

Peaks derived from Co2p_{3/2} assigned to the cobalt oxide were observed around 780.0, 782.1, 785.5 and 786.5 eV, a peak derived from N1s assigned to the pyridine ring was confirmed around 398.4 eV, and the presence of the cobalt oxide (CoO) and the pyridine ring was confirmed, in XPS. A peak around 399.7 eV was also observed in XPS, and it was thus confirmed that the divalent cobalt element of the cobalt oxide was coordinated to the nitrogen element constituting the pyridine ring to form Co-N.

Furthermore, the resulting catalyst was subjected to X-ray diffraction measurement (XRD) and thus diffraction peaks assigned to the cobalt oxide were observed at diffraction angles 2θ around 36.4°, 42.2° and 61.2° and peaks assigned to the cobalt metal were observed around 44.5° and 51.9°, and therefore the presence of not only the cobalt oxide, but also the cobalt metal was confirmed. No cobalt metal was confirmed in XPS where the penetration length was about several nanometers, and it was thus indicated that the cobalt metal was covered with a cobalt oxide layer and the cobalt-based catalyst had a core-shell structure.

The same structural analysis was performed also in Examples 51 to 58, and it could be thus confirmed that the cobalt oxide (CoO) and the nitrogen-containing part were contained.

### [Measurement of particle size]

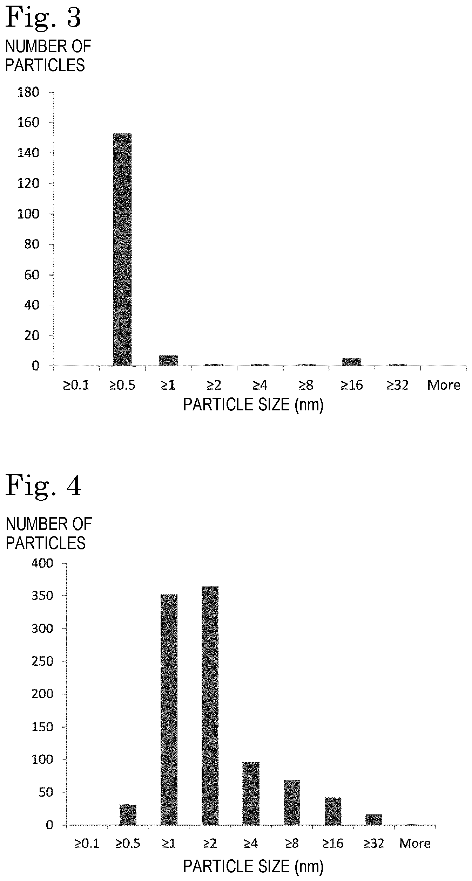

The structure of each of the catalysts obtained in Examples 50 and 57 was observed by TEM-EDX with a Scanning Transmission Electron Microscope (STEM, HITACHI HD2700) in a condition of an accelerating voltage of 200 kV. Furthermore, a distribution image (image of a region corresponding to 100 nm × 100 nm) of Co was taken by energy dispersive X-ray spectroscopy manufactured by AMETEK, Inc. The resulting image was processed at a contrast ratio of 50/255, and each cobalt domain in the image processed was defined as a cobalt particle and the area of the cobalt domain was determined. Such each particle was assumed to be circular, and the particle size (equivalent circular area diameter) was calculated from the area determined. Example 50 exhibited any particle size distributed in the range from 0.1 to 27 nm, an average particle size of 0.8 nm, and a particle size distribution as illustrated in Fig. 3. Example 57 exhibited any particle size distributed in the range from 0.2 to 35 nm, an average particle size of 2.3 nm, and a particle size distribution as illustrated in Fig. 4.

### [Evaluation method 2]

The conversion efficiency and also the faraday efficiency (FE) were determined by the same methods as in Evaluation method 1, with respect to each of the carbon dioxide reduction apparatuses of Examples 50 to 58 and Comparative Examples 3 to 5. The conversion efficiency was evaluated in the same manner as in Evaluation method 1. The faraday efficiency (FE) was evaluated according to the following evaluation criteria. The results are shown in Table 2.
AA: the faraday efficiency was 50% or more.
A: the faraday efficiency was 30% or more and less than 50%.
B: the faraday efficiency was 10% or more and less than 30%.
C: the faraday efficiency was less than 10%.

**[Table 2]**

| | Catalyst | Molar ratio of nitrogen-containing aromatic ring/metal element | Content of metal | FE CO2-CO @30mA/cm2 (%) | | CO2-CO conversion efficiency @30mA/cm2 (%) | | FE CO2-CO @100mA/cm2 (%) | | CO2-CO conversion efficiency @100mA/cm2 (%) | |
|---|---|---|---|---|---|---|---|---|---|---|---|
| Example 50 | Cobalt oxide/pyridine 1/carbon | 10 | 3 wt% | AA | 92 | AA | 64 | AA | 90 | AA | 55 |
| Example 51 | Cobalt oxide/pyridine 2/carbon | 10 | 3 wt% | A | 41 | B | 25 | B | 18 | B | 10 |
| Example 52 | Cobalt oxide/pyridine 3/carbon | 10 | 3 wt% | AA | 67 | AA | 48 | A | 46 | A | 29 |
| Example 53 | Cobalt oxide/pyridine 4/carbon | 10 | 3 wt% | AA | 64 | AA | 47 | AA | 55 | A | 32 |
| Example 54 | Cobalt oxide/pyridine 5/carbon | 10 | 3 wt% | AA | 73 | AA | 52 | AA | 53 | A | 31 |
| Example 55 | Cobalt oxide/imidazole/carbon | 10 | 3 wt% | AA | 85 | AA | 60 | AA | 74 | A | 44 |
| Example 56 | Cobalt oxide/triazole/carbon | 10 | 3 wt% | AA | 84 | AA | 58 | AA | 72 | A | 43 |
| Example 57 | Cobalt oxide/pyridine 1/carbon | 10 | 2 wt% | AA | 88 | AA | 62 | AA | 83 | AA | 50 |
| Example 58 | Cobalt oxide/pyridine 1/carbon | 10 | 3.5 wt% | AA | 88 | AA | 62 | AA | 86 | AA | 52 |
| Comparative Example 3 | Silver/carbon | - | 20 Wt% | C | 5 | C | 2 | C | 2 | C | 1 |
| Comparative Example 4 | Gold/carbon | - | 20 Wt% | C | 9 | C | 7 | C | 5 | C | 2 |
| Comparative Example 5 | Cobalt porphyrin/carbon | - | 3 wt% | C | 0 | C | 0 | C | 0 | C | 0 |

| | | | | | | | | | | | |
|---|---|---|---|---|---|---|---|---|---|---|---|
| * In Table 2, pyridine 1, pyridine 2, pyridine 3, pyridine 4, pyridine 5, imidazole and triazole mean that such respective catalysts have structures derived from poly(4-vinylpyridine), poly(2-vinylpyridine), 4-aminopyridine, poly(2,5-pyridine), 4,4'-diamino-2,2'-bipyridine, poly(4-vinylimidazole) and poly(1-vinyl-1,2,4-triazole). * In Table 2, Nitrogen-containing aromatic ring/metal element and Content of metal represent the molar ratio and the content in the catalyst raw material mixture, respectively. | | | | | | | | | | | |

As shown in Table 2, the carbon dioxide reduction apparatus of each of Examples 50 to 58, in which the catalyst obtained by sintering (heat-treating) the catalyst raw material mixture including the metal derivative, the nitrogen-containing derivative and the carbon compound was used, thus converted carbon dioxide to carbon monoxide and exhibited a favorable conversion efficiency. The catalyst of each Example could be produced by sintering at a relatively low temperature, and could be understood to be industrially excellent.

Furthermore, Examples 50 to 58, in which the cobalt oxide and the nitrogen-containing part such as a pyridine ring structure were contained and the cobalt element of the cobalt oxide was coordinated to the nitrogen element constituting the nitrogen-containing part, thus exhibited excellent conversion efficiency, faraday efficiency and current density.

On the other hand, the catalyst obtained in each of Comparative Examples 3 to 5 included neither any cobalt oxide nor any nitrogen-containing part, and could not reduce carbon dioxide to carbon monoxide at high faraday efficiency, conversion efficiency and current density.

### Reference Signs List

10, 20 Carbon dioxide reduction apparatus
11 First electrode
12 Second electrode
13 Ion exchange membrane
14 laminated assembly
15 Cathode compartment
16 Anode compartment
17A, 17B Introduction port
18A, 18B Discharge port
19 Power source
21 Electrochemical cell
22 Electrolyte solution

## Claims

1. A catalyst obtained by sintering a mixture comprising a metal derivative, a nitrogen-containing derivative and a carbon compound.

2. The catalyst according to claim 1, wherein the mixture comprises a pyridine derivative as the nitrogen-containing derivative.

3. The catalyst according to claim 1 or 2, wherein a molar ratio (nitrogen-containing aromatic ring/metal element) of a nitrogen-containing aromatic ring of the nitrogen-containing derivative to a metal element of the metal derivative in the mixture is 2 or more and 20 or less.

4. The catalyst according to any one of claims 1 to 3, wherein a content of a metal derived from the metal derivative in the mixture is 1.0 mass% or more and 5 mass% or less.

5. The catalyst according to any one of claims 1 to 4, wherein a metal element in the metal derivative is a metal element of Groups 7 to 12.

6. The catalyst according to claim 5, wherein the metal element is at least one selected from the group consisting of Co, Fe and Ni.

7. The catalyst according to any one of claims 1 to 6, wherein the nitrogen-containing derivative is at least one selected from the group consisting of a pyridine monomer having one or more functional groups, a bipyridine derivative, a terpyridine derivative, a pyridine oligomer having four or more pyridine rings and having a weight-average molecular weight of less than 10000, and a polymer having a weight-average molecular weight of 10000 or more and having a plurality of pyridine rings.

8. The catalyst according to any one of claims 1 to 7, wherein the carbon compound is carbon black.

9. The catalyst according to any one of claims 1 to 8, wherein the catalyst is a catalyst for carbon dioxide reduction.

10. A method for producing a catalyst, comprising sintering a mixture comprising a metal derivative, a nitrogen-containing derivative and a carbon compound to obtain a catalyst.

11. The method for producing a catalyst according to claim 10, wherein the mixture is sintered at 250°C or more and 500°C or less.

12. A catalyst comprising a cobalt oxide, a nitrogen-containing part and a carbon-support part, wherein the cobalt oxide and the nitrogen-containing part are supported on the carbon-support part.

13. The catalyst according to claim 12, wherein the catalyst comprises CoO as the cobalt oxide and comprises at least one selected from the group consisting of a pyridine ring structure, an imidazole ring structure and a triazole ring structure, as the nitrogen-containing part.

14. The catalyst according to claim 12 or 13, wherein the nitrogen-containing part is a pyridine ring structure.

15. The catalyst according to any one of claims 12 to 14, wherein the catalyst is obtained by heat-treating a mixture comprising a cobalt salt, a nitrogen-containing derivative and a carbon compound.

16. The catalyst according to claim 15, wherein the catalyst is obtained by heat-treating the mixture at 250°C or more and 500°C or less.

17. An electrode comprising the catalyst according to any one of claims 1 to 9 and 12 to 16, and an electrode base material to which the catalyst is attached.

18. A laminated assembly comprising a first electrode, an ion exchange membrane and a second electrode in the order presented, wherein the first electrode is the electrode according to claim 17.

19. The laminated assembly according to claim 18, wherein
the first electrode comprises the catalyst and a catalyst additive, and
the ion exchange membrane is a cation exchange membrane and the catalyst additive is a cation conducting compound, or
the ion exchange membrane is an anion exchange membrane and the catalyst additive is an anion conducting compound.

20. A laminated assembly comprising a first electrode, an ion exchange membrane and a second electrode in the order presented, wherein
the first electrode comprises a catalyst containing a metal-nitrogen element bond, and a catalyst additive, and
the ion exchange membrane is a cation exchange membrane and the catalyst additive is a cation conducting compound, or
the ion exchange membrane is an anion exchange membrane and the catalyst additive is an anion conducting compound.

21. The laminated assembly according to claim 19 or 20, wherein
the second electrode comprises a second catalyst and a catalyst additive, and
the ion exchange membrane is a cation exchange membrane and the catalyst additive in the second electrode is a cation conducting compound, or
the ion exchange membrane is an anion exchange membrane and the catalyst additive in the second electrode is an anion conducting compound.

22. The laminated assembly according to any one of claims 19 to 21, wherein
the ion exchange membrane is a cation exchange membrane, and
the catalyst additive is a compound having at least one functional group selected from the group consisting of a sulfonyl group, a phosphoric group, a hydroxyl group and a silicic group.

23. The laminated assembly according to any one of claims 19 to 21, wherein
the ion exchange membrane is an anion exchange membrane, and
the catalyst additive has at least one functional group selected from the group consisting of a pyridinium group, an imidazolium group, an amino group and an ammonium group.

24. The laminated assembly according to any one of claims 19 to 23, wherein
the first electrode comprises an electrode base material,
a catalyst composition comprising the catalyst and the catalyst additive is held by the electrode base material in the first electrode, and
a content of the catalyst additive in the catalyst composition is 10 mass% or more and 50 mass% or less.

25. A carbon dioxide reduction apparatus comprising the catalyst according to any one of claims 1 to 9 and 12 to 16, the electrode according to claim 17, or the laminated assembly according to any one of claims 18 to 24.
